(19) Europäisches Patentamt
European Patent Office
Office européen des brevets

(11) **EP 4 554 307 A1**

(12) **EUROPEAN PATENT APPLICATION**
published in accordance with Art. 153(4) EPC

(43) Date of publication:
**14.05.2025 Bulletin 2025/20**

(21) Application number: **23852749.3**

(22) Date of filing: **06.07.2023**

(51) International Patent Classification (IPC):
*H04W 72/23* (2023.01)     *H04W 16/28* (2009.01)
*H04L 5/00* (2006.01)

(52) Cooperative Patent Classification (CPC):
**H04L 5/00; H04W 16/28; H04W 72/23**

(86) International application number:
**PCT/KR2023/009546**

(87) International publication number:
**WO 2024/034863 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 KR 20220099861**

(71) Applicant: **Samsung Electronics Co., Ltd.
Suwon-si, Gyeonggi-do 16677 (KR)**

(72) Inventors:
• **JUNG, Euichang
  Suwon-si, Gyeonggi-do 16677 (KR)**
• **JANG, Youngrok
  Suwon-si, Gyeonggi-do 16677 (KR)**
• **YOON, Suha
  Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND DEVICE FOR DETERMINING BEAM FOR TRANSMISSION OR RECEPTION OF DOWNLINK CONTROL INFORMATION IN WIRELESS COMMUNICATION SYSTEM**

(57) The present disclosure provides a method performed by a terminal in a wireless communication system. The method may comprise the steps of: receiving configuration information related to a control resource set (CORESET), wherein the configuration information includes a CORESET group identifier corresponding to each CORESET; identifying a first CORESET associated with a first CORESET group and a second CORESET associated with a second CORESET group on the basis of the CORESET group identifier; receiving downlink control information (DCI) including a transmission configuration indicator (TCI) field on the basis of one of the first CORESET and the second CORESET; and when a codepoint of the TCI field corresponds to multiple TCI states, applying a first TCI state among the multiple TCI states to a channel associated with the first CORESET, and applying a second TCI state to a channel associated with the second CORESET.

FIG. 19

**Description**

[Technical Field]

The present disclosure relates to operations of a terminal and a base station in a wireless communication system. Specifically, the present disclosure relates to a method for determining a beam for transmission or reception of a physical channel/signal in a wireless communication system and a device capable of performing the same.

[Background Art]

5th generation (5G) mobile communication technologies define broad frequency bands such that high transmission rates and new services are possible, and can be implemented not only in "Sub 6GHz" bands such as 3.5 GHz, but also in "Above 6 GHz" bands referred to as mmWave including 28 GHz and 39 GHz. In addition, it has been considered to implement 6th generation (6G) mobile communication technologies (referred to as Beyond 5G systems) in terahertz bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multi input multi output (MIMO) for mitigating radio-wave path loss and increasing radio-wave transmission distances in mm Wave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

The disclosed embodiment is to provide a device and method capable of effectively providing services in a wireless communication system.

Specifically, the present disclosure is to provide a method for configuring a beam for transmission/reception of a physical channel/signal in a wireless communication system in which a plurality of transmission reception points (TRPs) operate, and a device therefor.

[Technical Solution]

In order to solve the above problems, an embodiment of the present disclosure provides a method performed by a terminal in a wireless communication system. The method may include receiving configuration information related to a control resource set (CORESET), the configuration information including CORESET group identifiers corresponding to each CORESET, identifying a first CORESET associated with a first CORESET group and a second CORESET associated with a second CORESET group, based on the CORESET group identifiers, receiving downlink control information (DCI) including a transmission configuration indicator (TCI) field based on one of the first CORESET and the second CORESET, and when a codepoint of the TCI field corresponds to multiple TCI states, applying a first TCI state among the multiple TCI states to a channel associated with the first CORESET and applying a second TCI state to a channel associated with the second CORESET.

Further, an embodiment of the present disclosure provides a method performed by a base station in a wireless communication system. The method may include transmitting configuration information related to a CORESET to a terminal, the configuration information including CORESET group identifiers corresponding to each CORESET, and a first CORESET group being associated with a first CORESET and a second CORESET group being associated with a second CORESET, based on the CORESET group identifiers, and transmitting DCI including a TCI field to the terminal based on one of the first CORESET and the second CORESET, in which, when codepoints of the TCI field are configured correspond to multiple TCI states, a first TCI state among the multiple TCI states is applied to a channel associated with the first CORESET, and a second TCI state is applied to a channel associated with the second CORESET.

Further, an embodiment of the present disclosure provides a terminal operating in a wireless communication system. The terminal may include a transceiver that transmits and receives a signal, and a control unit that is functionally connected to the transceiver, in which the control unit may be configured to receive configuration information related to a CORESET, the configuration information including CORESET group identifiers corresponding to each CORESET, identify a first CORESET associated with a first COFRESET group and a second CORESET associated with a second CORESET group, based on the CORESET group identifiers, receive DCI including a TCI field based on one of the first CORESET and the second CORESET, and when codepoints of the TCI field correspond to multiple TCI states, apply a first TCI state among the multiple TCI states to a channel associated with the first CORESET, and apply a second TCI state to a channel associated with the second CORESET.

Further, an embodiment of the present disclosure provides a base station operating in a wireless communication system. The base station may include a transceiver that transmits and receives a signal, and a control unit that is functionally connected to the transceiver, in which the control unit may be configured to transmit configuration information related to a CORESET to a terminal, the configuration information including CORESET group identifiers corresponding to each CORESET, and a first CORESET group being associated with a first CORESET and a second CORESET group being associated with a second CORESET, based on the CORESET group identifiers, and transmit DCI including a TCI field to the terminal based on one of the first CORESET and the second CORESET, and when codepoints of the TCI field are configured correspond to multiple TCI states, a first TCI state among the multiple TCI states may be applied to a channel associated with the first CORESET and a second TCI state may be applied to a channel associated with the second CORESET.

The technical subjects pursued in various embodiments of the disclosure may not be limited to the above-mentioned technical subjects, and other technical subjects which are not mentioned may be clearly understood from the following descriptions by those skilled in the art to which the disclosure pertains.

[Effect of the Invention]

According to an embodiment of the present disclosure, it is possible to reduce a signaling overhead required to configure/update a beam for transmission and reception of a physical channel/signal.

In addition, according to an embodiment of the present disclosure, by configuring beam information (e.g., TCI state) for uplink and downlink in a unified form, it is possible to reduce a time required to configure/update a beam.

In addition, according to an embodiment of the present disclosure, it is possible to configure TCI states for each CORESET and/or search space (set).

[Description of Drawings]

FIG. 1 is a diagram illustrating a basic structure of a time-frequency domain in a wireless communication system according to an embodiment of the present disclosure.

FIG. 2 is a diagram illustrating frame, subframe, and slot structures in the wireless communication system according to an embodiment of the present disclosure.

FIG. 3 is a diagram illustrating an example of a bandwidth part configuration in the wireless communication system according to an embodiment of the present disclosure.

FIG. 4 is a diagram illustrating an example of a control resource set (CORESET) configuration of a downlink control channel in the wireless communication system according to an embodiment of the present disclosure.

FIG. 5 is a diagram illustrating a structure of the downlink control channel in the wireless communication system according to an embodiment of the present disclosure.

FIG. 6 is a diagram illustrating a case in which a terminal (UE) may have a plurality of PDCCH monitoring positions within a slot in the wireless communication system according to an embodiment of the present disclosure through a Span.

FIG. 7 is a diagram illustrating an example of base station beam allocation according to a TCI state configuration in the wireless communication system according to an embodiment of the present disclosure.

FIG. 8 is a diagram illustrating an example of a TCI state allocation method for a PDCCH in the wireless communication system according to an embodiment of the present disclosure.

FIG. 9 is a diagram illustrating a TCI indication MAC CE signaling structure for a PDCCH DMRS in the wireless communication system according to an embodiment of the present disclosure.

FIG. 10 is a diagram illustrating an example of a beam configuration of a control resource set and a search space in the wireless communication system according to an embodiment of the present disclosure.

FIG. 11 is a diagram for describing a method for selecting a receivable control resource set in consideration of priorities when the terminal receives the downlink control channel in the wireless communication system according to an embodiment of the present disclosure.

FIG. 12 illustrates a process for beam configuration and activation of a PDSCH according to an embodiment of the present disclosure.

FIG. 13 is a diagram illustrating an example of an antenna port configuration and resource allocation for cooperative communication in the wireless communication system according to an embodiment of the present disclosure.

FIG. 14 is a diagram illustrating an example of a downlink control information (DCI) configuration for the cooperative communication in the wireless communication system according to an embodiment of the disclosure.

FIG. 15 is a diagram illustrating an enhanced PDSCH TCI state activation/deactivation MAC-CE structure according to an embodiment of the present disclosure.

FIG. 16 is a diagram illustrating an example of applying/configuring a TCI state to a CORESET and a search space (set) according to an embodiment of the present disclosure.

FIG. 17 illustrates an example of applying/configuring the TCI state to a PDCCH when a CORESET group is configured according to an embodiment of the present disclosure.

FIG. 18 illustrates an example for explaining a method for applying a TCI state to a PDCCH received in CORESETs in which different CORESET group IDs are configured according to an embodiment of the present disclosure.

FIG. 19 illustrates an example of a signaling sequence diagram of the terminal and the base station according to an embodiment of the present disclosure.

FIG. 20 is a diagram illustrating a structure of the terminal in the wireless communication system according to an embodiment of the present disclosure.

FIG. 21 is a diagram illustrating a structure of the base station in the wireless communication system according to an embodiment of the present disclosure.

[Mode for Disclosure]

Hereinafter, embodiments of the disclosure are described in detail below with reference to the accompanying drawings.

Detailed descriptions of technical specifications well-known in the art and unrelated directly to the disclosure may be omitted to avoid ob scuring the subject matter of the disclosure. Basically, unnecessary description is omitted in order to make the subject matter of the disclosure clearer.

Similarly, some elements are exaggerated, omitted, or simplified in the drawings and, in practice, the elements may have sizes and/or shapes different from those shown in the drawings. Throughout the drawings, the same or equivalent parts are indicated by the same reference numbers.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Further, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. In the disclosure, a "downlink" refers to a radio link via which a base station transmits a signal to a terminal, and an "uplink" refers to a radio link via which a terminal transmits a signal to a base station. Further, although the following description may be directed to a LTE or LTE-A system by way of example, embodiments of the disclosure may also be applied to other communication systems having similar technical backgrounds or channel types to the embodiments of the disclosure. Examples of other communication systems may include 5G (new radio, NR) mobile communication system developed beyond LTE-A mobile communication, and the 5G below may also be a concept that includes LTE, LTE-A, and other similar service. In addition, based on determinations by those skilled in the art, the disclosure may be applied to other communication systems through some modifications without significantly departing from the scope of the disclosure.

Each block of the flowcharts and/or block diagrams, and combinations of blocks in the flowcharts and/or block diagrams, can be implemented by computer program instructions. These computer program instructions may be provided to a processor of a general-purpose computer, special purpose computer, or other programmable data processing apparatus, such that the instructions that are executed via the processor of the computer or other programmable data processing apparatus implement the functions/acts specified in the flowcharts and/or block diagrams. These computer program instructions may also be stored in a non-transitory computer-readable memory that can direct a computer or other programmable data processing apparatus to function in a particular manner, such that the instructions stored in the non-transitory computer-readable memory produce articles of manufacture embedding instructions that implement the function/act specified in the flowcharts and/or block diagrams. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions/acts specified in the flowcharts and/or block diagrams.

Further, the respective block diagrams may illustrate parts of modules, segments, or codes including at least one or more executable instructions for performing specific logic function(s). The functions of the blocks may be performed in a different order in several modifications. For example, two successive blocks may be performed substantially at the same time, or they may be performed in reverse order according to their functions.

According to an embodiment of the disclosure, the term "module" means, but is not limited to, a software or hardware component, such as a field programmable gate array (FPGA) or application specific integrated circuit (ASIC), which performs certain tasks. A module may advantageously be configured to reside on the addressable storage medium and configured to be executed on one or more processors. Thus, a module may include components, such as software components, object-oriented software components, class components and task components, processes, functions, attributes, procedures, subroutines, segments of program code, drivers, firmware, microcode, circuitry, data, databases, data structures, tables, arrays, and variables. The functionalities of the components and modules may be combined into fewer components and modules or further separated into more components and modules. In addition, the components and modules may be implemented such that they execute one or more central processing units (CPUs) in a device or a secure multimedia card. Further, in an embodiment, a module may include one or more processors.

Mobile communication systems have evolved into high-speed, high-quality packet data communication systems (such as high speed packet access (HSPA), LTE (or evolved universal terrestrial radio access (E-UTRA)), and LTE-Advanced (LTE-A) defined in the 3GPP, high rate packet data (HRPD) defined in the 3rd generation partnership project-2 (3GPP2), ultra mobile broadband (UMB), and 802.16e defined by the Institute of Electrical and Electronics Engineers (IEEE)) capable of providing data and multimedia services beyond the early voice-oriented services.

As a representative broadband wireless communication system, an LTE system uses orthogonal frequency division multiplexing (OFDM) in the downlink and single carrier frequency division multiple access (SC-FDMA) in the uplink. The term "uplink (UL)" denotes a radio transmission path from a terminal (or UE or MS) to a base station (gNB), and the term "downlink (DL)" denotes a radio transmission path from the base station to the terminal. Such multiple access schemes are characterized by allocating the time-frequency resources for transmitting user-specific data and control information without overlapping each other, i.e., maintaining orthogonality, in order to distinguish among user-specific data and control information.

As a next generation communication system after LTE, the 5G communication system should meet various requirements of services demanded by users and service providers. The services to be supported by 5G systems may be categorized into three categories: enhanced mobile broadband (eMBB), massive machine type communications (mMTC), and ultra-reliable and low-latency communications (URLLC).

eMBB is intended to provide exceptionally high data rate in comparison with those supported by the legacy LTE, LTE-A, and LTE-A Pro. For example, the eMBB should increase the peak data rate up to 20 Gbps in DL and 10 Gbps in UL per base station. Simultaneously, eMBB should improve the user-perceived data rate. In order to meet such requirements, signal transmission/reception technologies including a MIMO technique should be improved. The data rate requirements for 5G communication systems may be met by use of a frequency bandwidth broader than 20 MHz in the frequency band of 3 to 6 GHz or above 6 GHz instead of the current LTE band of 2 GHz.

mMTC is intended to support application services for IoT. In order to provide mMTC-based IoT application services effectively, massive access resources should be secured for terminals within a cell, terminal coverage and battery life span should be improved, and device manufacturing cost should be reduced. The IoT services should be designed to support a large number of terminals (e.g., 1,000,000 terminals/km2) within a cell in consideration of the nature of the IoT terminals that are attached to various sensors and devices for providing a communication function. By the nature of the IoT services, the mMTC terminals will likely be located in coverage holes such as a basement of a building, which requires broader coverage in comparison with other services being supported in the 5G communication system. The mMTC terminals that are characterized by their low prices and battery replacement difficulty should be designed to have very long battery lifetime.

URLLC is targeted for mission-critical cellular-based communication services such as remote robots and machinery control, industrial automation, unmanned aerial vehicles, remote health care, and emergency alert services that require ultra-low latency and ultra-high reliability. Accordingly, a URLLC service requires an ultra-low latency and ultra-high reliability. For example, a URLLC service should meet the requirements of air-interface latency lower than 0.5 ms and a packet error rate less than or equal to $10^{-5}$. In order to support the URLLC services, the 5G system should support transmit time intervals (TTI) shorter than those of other services and assign broad resources in the frequency band. Accordingly, the 5G system should support a short TTI for the URLLC, which is shorter than that for other services, and allocate broad resources in a frequency band to secure reliability of the communication link.

Three services of 5G, namely eMBB, URLLC, and mMTC, may be multiplexed and transmitted in one system. At this time, in order to meet the different requirements of the respective services, different transmission/reception schemes and transmission/reception parameters may be used for the services. Of course, 5G is not limited to the above-described three services.

[NR time-frequency resources]

Hereinafter, the frame structure of the 5G system will be described in more detail with reference to the drawings.

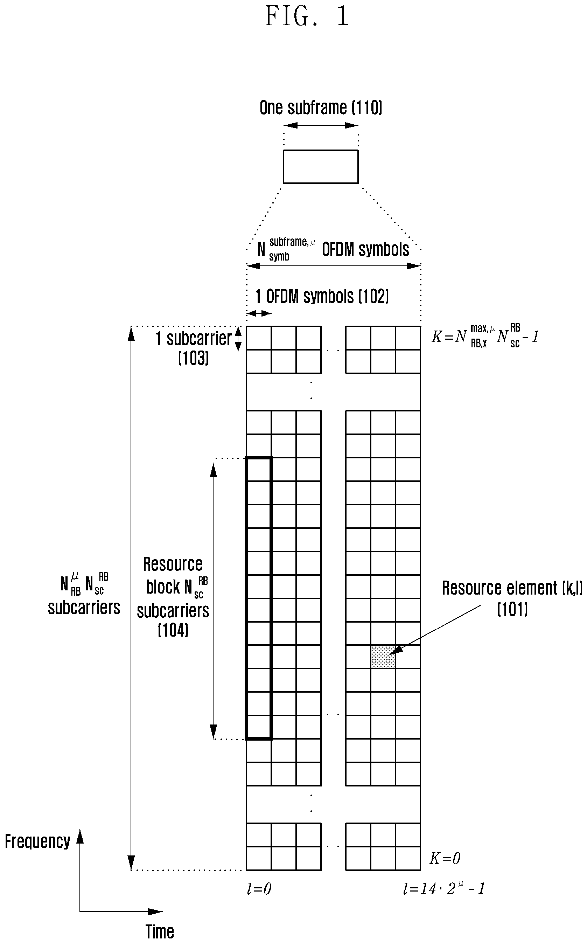

FIG. 1 is a diagram illustrating a basic structure of a time-frequency domain, which is a radio resource region where data or control channel are transmitted, in a 5G system.

In FIG. 1, a horizontal axis represents a time domain, and a vertical axis represents a frequency domain. A basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (e.g., twelve) consecutive REs may constitute one resource block (RB) 104.

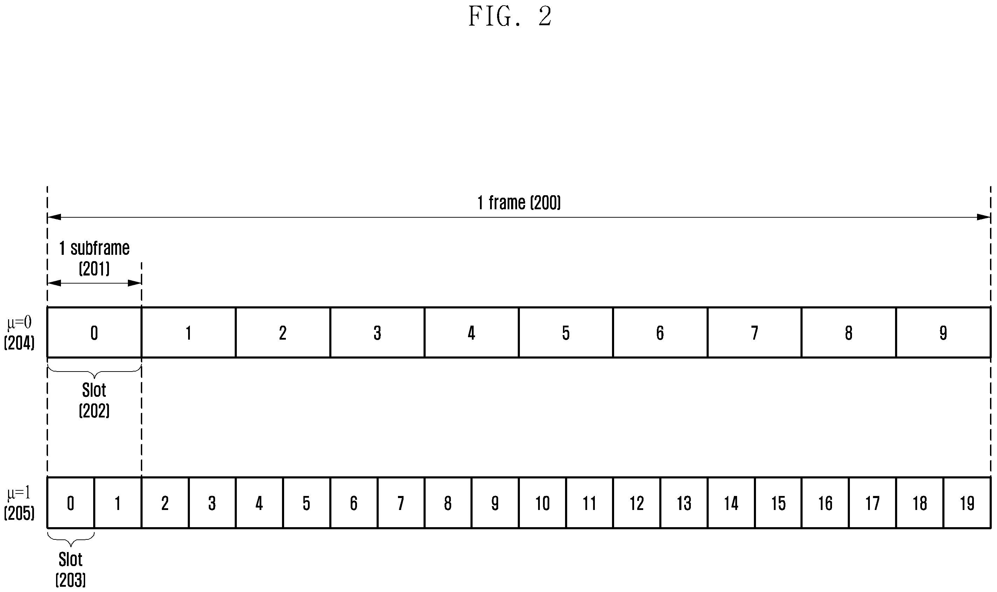

FIG. 2 illustrates frame, subframe, and slot structures in a wireless communication system according to an embodiment of the disclosure.

In FIG. 2, an example of the structure of a frame 200, a subframe 201, and a slot 202 is illustrated. 1 frame 200 may be defined as 10 ms. 1 subframe 201 may be defined as 1 ms, and accordingly one frame 200 may include a total of 10 subframes 201. 1 slot 202 or 203 may be defined as 14 OFDM symbols (that is, the number symbols $N_{symb}^{slot}$) per slot =14). 1 subframe 201 may include one or a plurality of slots 202 and 203, and the number of slots 202 or 203 per subframe 201 may vary depending on a configuration value $\mu$ 204 or 205 for subcarrier spacing. In the example of FIG. 2 illustrates the case in which the subcarrier spacing configuration value $\mu=0$ 204 and the case in which the subcarrier spacing configuration value $\mu=1$ 205. 1 subframe 201 may include one slot 202 in the case of $\mu=0$ 204, and 1 subframe 201 may include 2 slots 203 in the case of $\mu=1$ 205. That is, the number ( $N_{slot}^{subframe,\mu}$ ) of slots per subframe may vary depending on the configuration value ($\mu$) for subcarrier spacing, and accordingly the number ( $N_{slot}^{frame,\mu}$ ) of slots per frame may vary. The number ( $N_{slot}^{subframe,\mu}$ ) and the number ( $N_{slot}^{frame,\mu}$ ) according to the subcarrier spacing configuration value ($\mu$) may be defined as shown in [Table 1] below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Subsequently, a configuration of a bandwidth part (BWP) in a 5G system is described in detail with reference to the drawings.

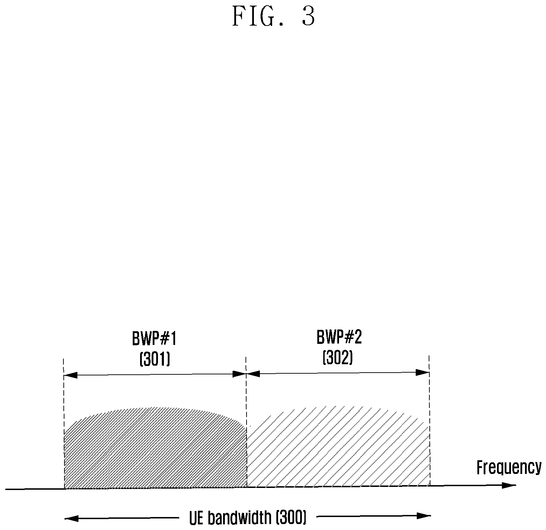

FIG. 3 illustrates an example of a configuration for a BWP in a wireless communication system according to an embodiment of the disclosure.

In FIG. 3, a UE bandwidth 300 is configured as two bandwidth parts, that is, BWP #1 301 and BWP #2 302. The BS may configure one or a plurality of BWPs in the UE, and the following information may be configured to each BWP.

【Table 2】

```
BWP ::=                                    SEQUENCE {

bwp-Id                                         BWP-Id,

      (bandwidth part identifier)

locationAndBandwidth          INTEGER (1..65536),

      (bandwidth part location)
```

```
        subcarrierSpacing                    ENUMERATED  {n0,  n1,

n2, n3, n4, n5},

        (subcarrier spacing)

        cyclicPrefix                         ENUMERATED

{ extended }

        (cyclic prefix)

        }
```

Of course, the disclosure is not limited to the example, and various parameters related to a BWP as well as the configuration information may be configured in the UE. The information may be transmitted from to the UE by the BS through higher-layer signaling, for example, radio resource control (RRC) signaling. Among one or a plurality of configured BWPs, at least one BSP may be activated. Information indicating whether to activate the configured BWPs may be semi-statically transferred from the BS to the UE through RRC signaling or may be dynamically transferred through Downlink Control Information (DCI).

According to an embodiment, the UE before the Radio Resource Control (RRC) connection may receive a configuration of an initial BWP for initial access from the BS through a master information block (MIB). More specifically, the UE may receive configuration information for a control resource set (CORESET) and a search space in which a PDCCH for receiving system information (remaining system information (RMSI) or system information block 1 (SIB1)) required for initial access through the MIB can be transmitted in an initial access step. The control resource set and the search space configured as the MIB may be considered as an identity (ID) 0. The BS may inform the UE of configuration information such as frequency allocation information for control resource set #0, time allocation information, numerology, and the like through the MIB. Further, the BS may inform the UE of configuration information for a monitoring period and an occasion of control resource set #0, that is, configuration information for search space #0 through the MIB. The UE may consider a frequency region configured as control resource set #0 acquired from the MIB as an initial bandwidth part for initial access. At this time, the ID of the initial BWP may be considered as 0.

The configuration for the BWP supported by the 5G system may be used for various purposes.

According to an embodiment, when a bandwidth supported by the UE is narrower than a system bandwidth, it may be supported through the BWP configuration. For example, the BS may configure a frequency location (configuration information 2) of the BWP in the UE, and thus the UE may transmit and receive data at a specific frequency location within the system bandwidth.

Further, according to an embodiment, in order to support different numerologies, the BS may configure a plurality of BWPs in the UE. For example, in order to support the UE to perform data transmission and reception using both subcarrier spacing of 15 kHz and subcarrier spacing of 30 kHz, two BWPs may be configured as subcarrier spacings of 15 kHz and 30 kHz, respectively. Different BWPs may be frequency division-multiplexed, and when data is to be transmitted and received at specific subcarrier spacing, BWPs configured at the corresponding subcarrier spacing may be activated.

According to an embodiment, in order to reduce power consumption of the UE, the BS may configure BWPs having different sizes of bandwidths in the UE. For example, when the UE supports a very large bandwidth, for example, 100 MHz but always transmits and receives data through the bandwidth, very high power consumption may be generated. Particularly, monitoring an unnecessary downlink control channel through a large bandwidth of 100 MHz in the state in which there is no traffic is very inefficient from the aspect of power consumption. In order to reduce power consumption of the UE, the BS may configure a BWP having a relatively narrow bandwidth, for example, a bandwidth of 20 MHz. The UE may perform a monitoring operation in the bandwidth part of 20 MHz in the state in which there is no traffic, and if data is generated, may transmit and receive data through the bandwidth part of 100 MHz according to an instruction from the BS.

In a method of configuring the BWP, UEs before the RRC connection may receive configuration information for an initial bandwidth part through a master information block (MIB) in an initial access step. More specifically, the UE may receive a configuration of a control resource set (CORESET) for a downlink control channel in which downlink control information (DCI) for scheduling a system information block (SIB) can be transmitted from an MIB of a physical broadcast channel (PBCH). A bandwidth of the control resource set configured as the MIB may be considered as an initial bandwidth part, and the UE may receive a physical downlink shared channel (PDSCH), in which the SIB is transmitted, through the configured initial bandwidth part. The initial BWP may be used not only for reception of the SIB but also other system information (OSI), paging, or random access.

[BWP Change]

When one or more BWPs are configured in the UE, the BS may indicate a change (or switching or transition) in the BWPs to the UE through a BWP indicator field within the DCI. For example, in FIG. 3, when a currently activated BWP of the UE is BWP #1 301, the BS may indicate BWP #2 302 to the UE through a BWP indicator within DCI and the UE may make a BWP change to BWP #2 302 indicated by the received BWP indicator within DCI.

As described above, since the DCI-based BWP change may be indicated by the DCI for scheduling the PDSCH or the PUSCH, the UE should be able to receive or transmit the PDSCH or the PUSCH scheduled by the corresponding DCI in the changed BWP without any difficulty if the UE receives a BWP change request. To this end, the standard has defined requirements for a delay time ($T_{BWP}$) required for the BWP change, and, for example, may be defined as follows.

[Table 3]

| $\mu$ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the BWP change delay time may support type 1 or type 2 according to a UE capability. The UE may report a supportable BWP delay time type to the BS.

When the UE receives DCI including a BWP change indicator in slot n according to the requirements for the BWP change delay time, the UE may complete a change to a new BWP indicated by the BWP change indicator at a time point that is not later than slot n+$T_{BWP}$ and transmit and receive a data channel scheduled by the corresponding DCI in the changed new BWP. When the BS desires to schedule a data channel in the new BWP, the BS may determine time domain resource allocation for the data cannel in consideration of the BWP change delay time ($T_{BWP}$) of the UE. That is, when scheduling the data channel in the new BWP, the BS may schedule the corresponding data channel after the BWP change delay time in a method of determining the time domain resource allocation for the data channel. Accordingly, the UE may not expect that the DCI indicating the BWP change indicates a slot offset (K0 or K2) smaller than the BWP change delay time ($T_{BWP}$).

If the UE receives DCI (for example, DCI format 1_1 or 0_1) indicating the BWP change, the UE may perform no transmission or reception during a time interval from a third symbol of a slot for receiving the PDCCH including the corresponding DCI to a start point of the slot indicated by the slot offset (K0 or K2) indicated through a time domain resource allocation field within the corresponding DCI. For example, when the UE receives DCI indicating the BWP change in slot n and a slot offset value indicated by the corresponding DCI is K, the UE may perform no transmission or reception from the third symbol of slot n to a symbol before slot n+K (that is, the last symbol of slot n+K-1).

[SS/PBCH block]

Subsequently, a synchronization signal (SS)/PBCH block in a 5G system is described.

The SS/PBCH block may be a physical layer channel block including a primary SS (PSS), a secondary SS (SSS), and a PBCH. A detailed description thereof is made below.

- PSS: is a signal which is a reference of downlink time/frequency synchronization and provides some pieces of information of a cell ID.

- SSS: is a reference of downlink time/frequency synchronization and provides the remaining cell ID information which the PSS does not provide. In addition, the SSS serves as a reference signal for demodulation of a PBCH.
- PBCH: provides necessary system information required for transmitting and receiving a data channel and a control channel by the UE. The necessary system information may include search space-related control information indicating radio resource mapping information of the control channel and scheduling control information for a separate data channel for transmitting system information.
- SS/PBCH block: includes a combination of PSS, SSS, and PBCH. One or a plurality of SS/PBCH blocks may be transmitted within a time of 5 ms, and each of the transmitted SS/PBCH blocks may be separated by an index.

The UE may detect the PSS and the SSS in an initial access stage and decode the PBCH. The UE may acquire an MIB from the PBCH and receive a configuration of control resource set (CORESET) #0 (corresponding to a control resource set having control resource set index 0) therefrom. The UE may monitor control resource set #0 on the basis of the assumption that the selected SS/PBCH block and a demodulation reference signal (DMRS) transmitted in control resource set #0 are quasi co-located (QCLed). The UE may receive system information through downlink control information transmitted in control resource set #0. The UE may acquire configuration information related to a random access channel (RACH) required for initial access from the received system information. The UE may transmit a physical RACH (PRACH) to the BS in consideration of the selected SS/PBCH block index, and the BS receiving the PRACH may acquire the SS/PBCH block index selected by the UE. The BS may know which block is selected by the UE from among the SS/PBCH blocks and that CORESET #0 related thereto is monitored.

[Regarding PDCCH: DCI]

Subsequently, downlink control information (DCI) in a 5G system is described in detail.

In the 5G system, scheduling information for uplink data (or a physical uplink data channel (physical uplink shared channel (PUSCH)) or downlink data (or physical downlink data channel (physical downlink shared channel (PDSCH)) is transmitted from the BS to the UE through DCI. The UE may monitor a fallback DCI format and a non-fallback DCI format for the PUSCH or the PDSCH. The fallback DCI format may include a fixed field predefined between the BS and the UE, and the non-fallback DCI format may include a configurable field.

The DCI may be transmitted through a Physical Downlink Control Channel (PDCCH) via a channel coding and modulation process. A cyclic redundancy check (CRC) may be added to a DCI message payload and may be scrambled by a radio network temporary identifier (RNTI) corresponding to the identity of the UE. Depending on the purpose of the DCI message, for example, UE-specific data transmission, a power control command, a random access response, or the like, different RNTIs may be used. That is, the RNTI is not explicitly transmitted but is included in a CRC calculation process to be transmitted. If the DCI message transmitted through the PDCCH is received, the UE may identify the CRC through the allocated RNTI, and may recognize that the corresponding message is transmitted to the UE when the CRC is determined to be correct on the basis of the CRC identification result.

For example, DCI for scheduling a PDSCH for system information (SI) may be scrambled by an SI-RNTI. DCI for scheduling a PDSCH for a random access response (RAR) message may be scrambled by an RA-RNTI. DCI for scheduling a PDSCH for a paging message may be scrambled by a P-RNTI. DCI for notifying of a slot format indicator (SFI) may be scrambled by an SFI-RNTI. DCI for notifying of transmit power control (TPC) may be scrambled with a TPC-RNTI. DCI for scheduling a UE-specific PDSCH or PUSCH may be scrambled by a cell RNTI (C-RNTI).

DCI format 0_0 may be used for fallback DCI for scheduling a PUSCH in which case the CRC may be scrambled by a C-RNTI. DCI format 0_0 in which the CRC is scrambled by the C-RNTI may include, for example, the following information.

[Table 4]

| |
|---|
| - Identifier for DCI formats - [1] bit |
| - Frequency domain resource assignment -[ $\left\lceil \log_2(N_{RB}^{UL,BWP}(N_{RB}^{UL,BWP}+1)/2) \right\rceil$ ] bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - Transmit power control (TPC) command for scheduled PUSCH - [2] bits |

(continued)

| - Uplink (UL)/supplementary UL (SUL) indicator - 0 or 1 bit |
|---|

DCI format 0_1 may be used for non-fallback DCI for scheduling a PUSCH in which case the CRC may be scrambled by a C-RNTI. DCI format 0_1 in which the CRC is scrambled by the C-RNTI may include, for example, the following information below.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

For resource allocation type 0, $\left\lceil N_{\mathrm{RB}}^{\mathrm{UL,BWP}} / P \right\rceil$ bits

For resource allocation type 1, $\left\lceil \log_2 (N_{\mathrm{RB}}^{\mathrm{UL,BWP}} (N_{\mathrm{RB}}^{\mathrm{UL,BWP}} + 1)/2) \right\rceil$ bits

- Time domain resource assignment -1, 2, 3, or 4 bits
- Virtual resource block (VRB)-to-physical resource block (PRB) mapping - 0 or 1 bit, only for resource allocation type 1.

0 bit if only resource allocation type 0 is configured;
1 bit otherwise.
- Frequency hopping flag - 0 or 1 bit, only for resource allocation type 1.
0 bit if only resource allocation type 0 is configured;
1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
1 bit for semi-static HARQ-ACK codebook;
2 bits for dynamic HARQ-ACK codebook with single HARQ-ACK codebook.
- 2nd downlink assignment index - 0 or 2 bits
2 bits for dynamic HARQ-ACK codebook with two HARQ-ACK sub-codebooks;
0 bit otherwise.
- TPC command for scheduled PUSCH - 2 bits

- SRS resource indicator $\left\lceil \log_2 \left( \sum_{k=1}^{L_{\max}} \binom{N_{\mathrm{SRS}}}{k} \right) \right\rceil$ or $\left\lceil \log_2 (N_{\mathrm{SRS}}) \right\rceil$ bits

● $\left\lceil \log_2 \left( \sum_{k=1}^{L_{\max}} \binom{N_{\mathrm{SRS}}}{k} \right) \right\rceil$ bits for non-codebook based PUSCH transmission;

● $\left\lceil \log_2 (N_{\mathrm{SRS}}) \right\rceil$ bits for codebook based PUSCH transmission.

- Precoding information and number of layers -up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association - 0 or 2 bits.
- beta_offset indicator - 0 or 2 bits
- DMRS sequence initialization - 0 or 1 bit

DCI format 1_0 may be used for fallback DCI for scheduling a PDSCH in which case the CRC may be scrambled by a C-RNTI. DCI format 1_0 in which the CRC is scrambled by the C-RNTI may include, for example, the following information.

[Table 6]

- Identifier for DCI formats - [1] bit

- Frequency domain resource assignment -[ $\left\lceil \log_2(N_{RB}^{DL,BWP}(N_{RB}^{DL,BWP}+1)/2) \right\rceil$ ] bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used for non-fallback DCI for scheduling a PDSCH in which case the CRC may be scrambled by a C-RNTI. DCI format 1_1 in which the CRC is scrambled by the C-RNTI may include, for example, the following information .

[Table 7]

- Carrier indicator - 0 or 3 bits
- Identifier for DCI formats - [1] bits
- Bandwidth part indicator - 0, 1 or 2 bits
- Frequency domain resource assignment

For resource allocation type 0, $\left\lceil N_{RB}^{DL,BWP}/P \right\rceil$ bits

For resource allocation type 1,

$\left\lceil \log_2(N_{RB}^{DL,BWP}(N_{RB}^{DL,BWP}+1)/2) \right\rceil$ bits

- Time domain resource assignment -1, 2, 3, or 4 bits
- VRB-to-PRB mapping - 0 or 1 bit, only for resource allocation type 1.

0 bit if only resource allocation type 0 is configured;

1 bit otherwise.

- Physical resource block (PRB) bundling size indicator - 0 or 1 bit
- Rate matching indicator - 0, 1, or 2 bits
- Zero power (ZP) channel state information
(CSI)-reference signal (RS) trigger
- 0, 1, or 2 bits

For transport block 1:
- Modulation and coding scheme - 5 bits
- New data indicator - 1 bit
- Redundancy version - 2 bits

For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits

(continued)

| |
|---|
| - TPC command for scheduled PUCCH - 2 bits<br>- PUCCH resource indicator - 3 bits<br>- PDSCH-to-HARQ_feedback timing indicator - 3 bits<br>- Antenna ports - 4, 5 or 6 bits<br>- Transmission configuration indication - 0 or 3 bits<br>- SRS request - 2 bits<br>- CBG transmission information - 0, 2, 4, 6, or 8 bits<br>- Code block group (CBG) flushing out information - 0 or 1 bit<br>- DMRS sequence initialization - 1 bit |

[PDCCH: CORESET, REG, CCE, Search Space]

Subsequently, a downlink control channel in a 5G communication system is described in more detail with reference to the drawings.

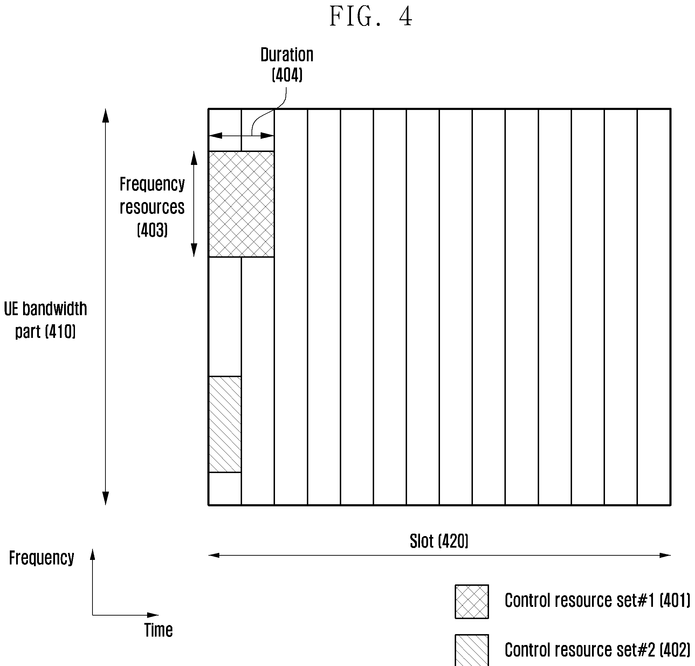

FIG. 4 illustrates an example of a control resource set (CORESET) in which a downlink control channel is transmitted in 5G wireless communication systems. FIG. 4 illustrates an example in which a UE bandwidth part 410 is configured in the frequency axis and two control resource sets (control resource set #1 401 and control resource set #2 402) are configured within 1 slot 420 in the time axis. The control resource sets 401 and 402 may be configured in specific frequency resources 403 within a total UE BWP 410 in the frequency axis. The control resource set may be configured as one or a plurality of OFDM symbols in the time axis, which may be defined as a control resource set duration 404. Referring to the example illustrated in FIG. 4, control resource set #1 401 may be configured as a control resource set duration of 2 symbols, and control resource set #2 402 may be configured as a control resource set duration of 1 symbol.

The control resource sets in the 5G system may be configured through higher-layer signaling (for example, system information, a master information block (MIB), or radio resource control (RRC) signaling) in the UE by the BS. Configuring the control resource set in the UE may mean providing information such as a control resource set identity, a frequency location of the control resource set, and a symbol length of the control resource set. For example, the information of Table 8 may be included.

【Table 8】

```
ControlResourceSet ::=                                      SEQUENCE {

        -- Corresponds to L1 parameter 'CORESET-ID'



        controlResourceSetId                               ControlResourceSetId,

(control resource set identity)

        frequencyDomainResources                           BIT   STRING   (SIZE

(45)),

(frequency axis resource allocation information)

        duration                                           INTEGER

(1..maxCoReSetDuration),

(time axis resource allocation information)

        cce-REG-MappingType

        CHOICE {

(CCE-to-REG mapping scheme)

                interleaved

        SEQUENCE {



                        reg-BundleSize

        ENUMERATED {n2, n3, n6},

        (REG bundle size)
```

```
                    precoderGranularity

        ENUMERATED {sameAsREG-bundle, allContiguousRBs},



                    interleaverSize

        ENUMERATED {n2, n3, n6}

                    (interleaver size)



                    shiftIndex

            INTEGER(0..maxNrofPhysicalResourceBlocks-1)

                                            OPTIONAL

            (interleaver shift)
        },

        nonInterleaved                                          NULL

        },

    tci-StatesPDCCH

    SEQUENCE(SIZE (1..maxNrofTCI-StatesPDCCH)) OF TCI-StateId

                    OPTIONAL,

(QCL configuration information)

    tci-PresentInDCI

    ENUMERATED {enabled}

                                        OPTIONAL,    --
```

> Need S
>
> }

In Table 8, tci-StatesPDCCH (referred to as a transmission configuration indication (TCI) state) configuration information may include information on one or a plurality of synchronization signal (SS)/physical broadcast channel (PBCH) block indexes or channel state information reference signal (CSI-RS) indexes having the Quasi Co-Located (QCL) relationship with a DMRS transmitted in the corresponding CORESET.

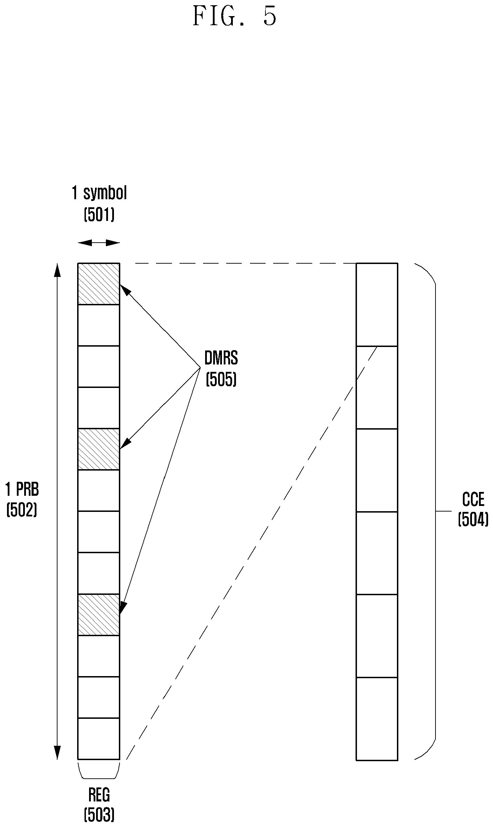

FIG. 5 illustrates an example of a basic unit of time and frequency resources included in a downlink control channel which can be used in a 5G system. Referring to FIG. 5A, the basic unit of time and frequency resources included in the control channel may be a resource element group (REG) 503, and the REG 503 may be defined as 1 OFDM symbol 501 in the time axis and 1 physical resource block (PRB) 502 in the frequency axis, that is, as 12 subcarriers. The BS may configure a downlink control channel allocation unit by concatenating the REGs 503.

As illustrated in FIG. 5, when the basic unit for allocation of the downlink control channel in the 5G system is a control channel eminent (CCE) 504, 1 CCE 504 may include a plurality of REGs 503. In a description of the REG 503 illustrated in FIG. 5 by way of example, the REG 503 may include 12 REs and, when 1 CCE 504 includes 5 REGs 503, 1 CCE 504 may include 72 REs. When a downlink CORESET is configured, the corresponding area may include a plurality of CCEs 504, and a specific downlink control channel may be mapped to one or a plurality of CCEs 504 according to an aggregation level (AL) within the CORESET and then transmitted. CCEs 504 within the CORESET may be distinguished by numbers and the numbers of the CCEs 504 may be assigned according to a logical mapping scheme.

The basic unit of the downlink control channel illustrated in FIG. 5, that is, the REG 503, may include all of the REs to which the DCI is mapped and the areas to which DMRSs 505, which are reference signals for decoding the REs, are mapped. As illustrated in FIG. 5, 3 DMRSs 505 may be transmitted in 1 REG 503 The number of CCEs required to transmit the PDCCH may be 1, 2, 4, 8, or 15 according to the aggregation level (AL), and the different number of CCEs may be used to implement link adaptation of the downlink control channel. For example, if AL=L, one downlink control channel may be transmitted through L CCEs. The UE should detect a signal in the state in which the UE does not know information on the downlink control channel, and a search space indicating a set of CCEs is defined to perform blind decoding in a wireless communication system (for example, 5G or NR system) according to an embodiment of the disclosure. The search space is a set of downlink control channel candidates including CCEs for which the UE should attempt decoding at the given aggregation level, and there are several aggregation levels at which one set of CCEs is configured by 1, 2, 4, 8, and 15 CCEs, so that the UE may have a plurality of search spaces. A search space set may be defined as a set of search spaces at all the configured aggregation levels.

The search space may be classified into a common search space and a UE-specific search space. UEs in a predetermined group or all UEs may search for a common search space of the PDCCH in order to receive cell-common control information such as dynamic scheduling for system information or paging messages. For example, PDSCH scheduling allocation information for transmission of an SIB including information on a service provider of a cell may be received by searching for (monitoring) a common search space of the PDCCH. In the case of the common search space, UEs in a predetermined group or all UEs should receive the PDCCH, so that the common-search space may be defined as a set of pre-arranged CCEs. Scheduling allocation information for the UE-specific PDSCH or PUSCH may be received by searching for a UE-specific search space of the PDCCH. The UE-specific search space may be UE-specifically defined as a UE identity and a function of various system parameters.

A parameter for a search space of a PDCCH in 5G may be configured in the UE by the BS through higher-layer signaling (for example, SIB, MIB, or RRC signaling). For example, the BS may configure, in the UE, the number of PDCCH candidates at each aggregation level L, a monitoring period of the search space, a monitoring occasion in units of symbols within the slot for the search space, a search space type, that is, a common search space or a UE-specific search space, a combination of a DCI format and an RNTI to be monitored in the corresponding search space, and a control resource set index for monitoring the search space. For example, the following information may be included.

【Table 9】

| |
|---|
| SearchSpace ::=                                                       SEQUENCE {<br><br>    -- Identity of the search space. SearchSpaceId = 0 identifies the SearchSpace<br><br>configured via PBCH (MIB) or ServingCellConfigCommon.<br><br>    searchSpaceId<br><br>    SearchSpaceId,<br><br>(search space identifier)<br><br>    controlResourceSetId<br><br>    ControlResourceSetId,<br><br>(control resource set identifier)<br><br>    monitoringSlotPeriodicityAndOffset                CHOICE {<br><br>(monitoring slot level period)<br><br>        sl1 |

NULL,

sl2

INTEGER (0..1),

sl4

INTEGER (0..3),

sl5

INTEGER (0..4),

sl8

INTEGER (0..7),

sl10

INTEGER (0..9),

sl16

INTEGER (0..15),

sl20

INTEGER (0..19)

}

OPTIONAL,

duration (monitoring length)                    INTEGER (2..2559)

monitoringSymbolsWithinSlot                    BIT

STRING (SIZE (14))

OPTIONAL,

(monitoring symbol within slot)

nrofCandidates

SEQUENCE {

(number of PDCCH candidates at each aggregation level)

aggregationLevel1

ENUMERATED {n0, n1, n2, n3, n4, n5, n6, n8},

aggregationLevel2

ENUMERATED {n0, n1, n2, n3, n4, n5, n6, n8},

aggregationLevel4

ENUMERATED {n0, n1, n2, n3, n4, n5, n6, n8},

aggregationLevel8

ENUMERATED {n0, n1, n2, n3, n4, n5, n6, n8},

aggregationLevel16

ENUMERATED {n0, n1, n2, n3, n4, n5, n6, n8}

},


searchSpaceType

CHOICE {

(search space type)

-- Configures this search space as common search space (CSS) and DCI formats to monitor.

common

SEQUENCE {

(common search space)

}

ue-Specific

SEQUENCE {

(UE-specific search space)

-- Indicates whether the UE monitors in this USS for DCI formats 0-0 and 1-0 or for formats 0-1 and 1-1.

formats

ENUMERATED {formats0-0-And-1-0, formats0-1-And-1-1},

...

}

The BS may configure one or a plurality of search space sets in the UE according to configuration information. According to some embodiments, the BS may configure search space set 1 and search space 2 in the UE, and the configuration may be performed such that DCI format A scrambled by an X-RNTI in search space set 1 is monitored in the common search space and DCI format B scrambled by a Y-RNTI in search space set 2 is monitored in the UE-specific search space.

According to configuration information, one or a plurality of search space sets may exist in the common search space or the UE-specific search space. For example, search space set #1 and search space set #2 may be configured as common search spaces, and search space set #3 and search space set #4 may be configured as UE-specific search spaces.

In the common search space, the following combinations of DCI formats and RNTIs may be monitored. Of course, the disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI

- DCI format 2_3 with CRC scrambled by TPC-SRS-RNTI

In the UE-specific search space, the following combinations of DCI formats and RNTIs may be monitored. Of course, the disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The described RNTIs may follow the following definition and use.

- Cell RNTI (C-RNTI): used for scheduling UE-specific PDSCH
- Temporary Cell RNTI(TC-RNTI): used for UE-specific PDSCH scheduling
- Configured Scheduling (CS)-RNTI: used for semi-statically configured UE-specific PDSCH scheduling

Random Access RNTI (RA-RNTI): used for PDSCH scheduling at random access stage

- Paging RNTI (P-RNTI): used for PDSCH scheduling through which paging is transmitted
- System Information RNTI (SI-RNTI): used for PDSCH scheduling through which system information is transmitted
- Interruption RNTI (INT-RNTI): used for indicating whether puncturing is performed for PDSCH
- Transmit Power Control for PUSCH RNTI (TPC-PUSCH-RNTI): used for indicating PUSCH power control command
- Transmit Power Control for PUCCH RNTI (TPC-PUCCH-RNTI): used for indicating PUCCH power control command
- Transmit Power Control for SRS RNTI (TPC-SRS-RNTI): used for indicating SRS power control command

The DCI formats may follow the following definition.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

A control resource set p and a search space of an aggregation level L in a search space set s in 5G may be expressed as [Equation 1] below.

【Equation 1】

$$L \cdot \left\{ \left( Y_{p,n_{s,f}^{\mu}} + \left\lfloor \frac{m_{s,n_{CI}} \cdot N_{\text{CCE},p}}{L \cdot M_{s,\max}^{(L)}} \right\rfloor + n_{CI} \right) mod \left\lfloor N_{\text{CCE},p}/L \right\rfloor \right\} + i$$

- L: aggregation level

- $n_{CI}$: carrier index

- $N_{\text{CCE},p}$: total number of CCEs existing within control resource set p

- $n_{s,f}^{\mu}$: slot index

- $M^{(L)}_{s,max}$: number of PDCCH candidates at aggregation level L

- $m_{s,n_{CI}} = 0, \cdots, M^{(L)}_{p,s,max} - 1$ : PDCCH candidate index for aggregation level L

- i=0,...,L-1

- $Y_{p,n^{\mu}_{s,f}} = \left(A_p \cdot Y_{p,n^{\mu}_{s,f}-1}\right) mod D$ , $Y_{p,-1} = n_{RNTI} \neq 0$, $A_p$=39827 for $p$ mod 3=0, $A_p$=39829 for $p$ mod 3=1, $A_p$=39839 for $p$ mod 3=2, and D=65537.

- $n_{RNTI}$ : terminal identity

For a common search space, $Y_{p,n^{\mu}_{s,f}}$ may correspond to 0.

For a UE-specific search space, the value of $Y_{p,n^{\mu}_{s,f}}$ may correspond to a value varying depending on the terminal's identity (C-RNTI or ID configured for the terminal by the base station) and the time index.

In 5G, a set of search space sets monitored by the UE at every time point may vary as a plurality of search space sets can be configured as different parameters (for example, the parameters in Table 9). For example, when search space set #1 is configured on an X-slot period, search space set #2 is configured on a Y-slot period, and X and Y are different from each other, the UE may monitor all of search space set #1 and search space set #2 in a specific slot and monitor one of search space set #1 and search space set #2 in another specific slot.

[PDCCH: span]

The UE may report a UE capability in the case in which a plurality of PDCCH monitoring locations exist within the slot and, at this time, the concept "span" may be used. The span is consecutive symbols in which the UE can monitor a PDCCH within the slot, and each PDCCH monitoring location may be within 1 span. The span may be expressed by (X,Y), in which X refers to the minimum number of symbols which should be spaced apart between first symbols of two consecutive spans and Y refers to the number of consecutive symbols for monitoring a PDCCH within 1 span. At this time, the UE may monitor the PDCCH in a section within Y symbols from the first symbol of the span within the span.

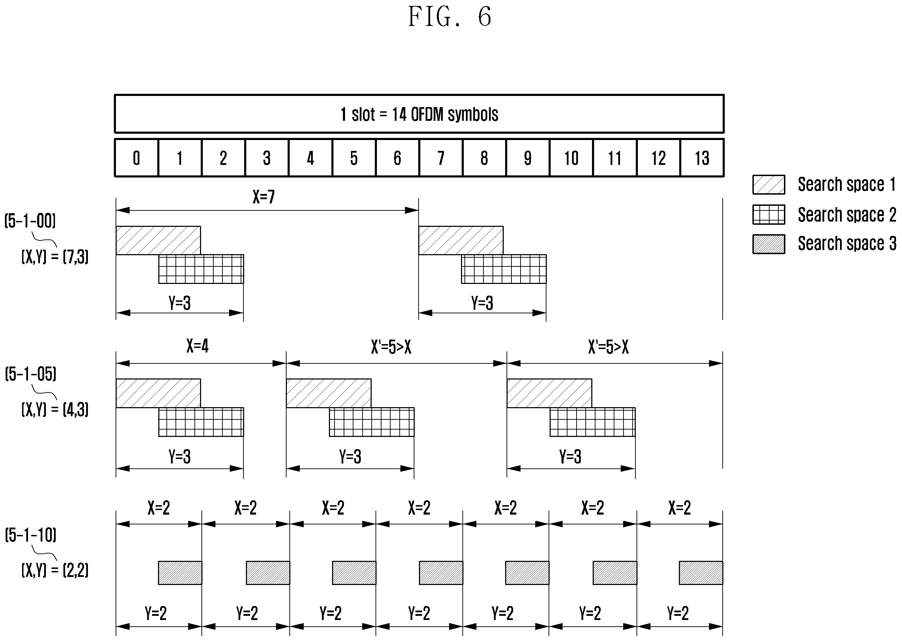

FIG. 6 illustrates the case in which the UE may have a plurality of PDCCH monitoring locations within the slot through the span in a wireless communication system according to an embodiment of the disclosure.

The span can be expressed by (X,Y) = (7,3), (4,3), and (2,2), and the three cases are expressed as (5-1-00), (5-1-05), and (5-1-10) in FIG. 6. For example, (5-1-00) indicates the case in which the number of spans which can be expressed by (7,4) is 2 in the slot. An interval between first symbols of the 2 spans is expressed as X=7, a PDCCH monitoring location may exist within a total of Y=3 symbols from the first symbol of each span, and search spaces 1 and 2 exist within Y=3 symbols. In another example, (5-1-05) indicates the case in which a total number of spans which can be expressed by (4,3) is 3 in the slot, and an interval between a second span and a third span is X'=5 symbols larger than X=4.

[PDCCH: UE capability reporting]

The slot location of the common search space and the UE-specific search space is indicated by a monitoringSymbolsWitninSlot parameter in [Table 11-1], and the symbol location within the slot is indicated by a bitmap through a monitoringSymbolsWithinSlot parameter in [Table 9]. Meanwhile, the symbol location within the slot in which the UE can perform search space monitoring may be reported to the BS through the following UE capability.

- UE capability 1 (hereinafter, referred to as FG 3-1). When the number of monitoring occasions for type 1 and type 3 search spaces or the UE-specific search space is 1 within the slot, the UE capability is a capability such as Table 11-1 to monitor the corresponding MO if the corresponding MO is within first 3 symbols in the slot. The UE capability is a mandatory capability which all UEs supporting NR should support and whether to support the capability is not explicitly reported to the BS.

[Table 11-1]

| | Index | Feature group | Components | Field name in TS 38.331 [2] |
|---|---|---|---|---|
| | 3-1 | Basic DL control channel | 1) One configured CORESET per BWP per cell in addition to CORESET0- CORESET resource allocation of 6RB bit-map and duration of 1 - 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or 6 RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16 | n/a |
| | | | - UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per<br>scheduled CC for FDD<br>6) Processing one unicast DCI scheduling DL and 2 unicast DCI scheduling UL per slot per scheduled CC for TDD | |

- UE capability 2 (hereinafter, referred to as FG 3-2). When the number of monitoring occasions (MOs) for the common search space or the UE-specific search space is one within the slot as shown in [Table 11-2] below, the UE capability is a capability to perform monitoring regardless of the start symbol location of the corresponding MO. The UE capability can be optionally supported by the UE, and whether to support the capability is explicitly reported to the BS.

[Table 11-2]

| | Index | Feature group | Components | Field name in TS 38.331 [2] |
|---|---|---|---|---|
| | 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter, referred to as FG 3-5, 3-5a, or 3-5b). When the number of monitoring occasions (MOs) for the common search space or the UE-specific search space is plural within the slot as shown in [Table 11-3] below, the UE capability indicates a pattern of MOs which the UE can monitor. The pattern includes an interval X between start symbols of different MOs and a maximum symbol length Y of one MO. A combination of (X,Y) supported by the UE may be one or more of {(2,2), (4,3), (7,3)}. The UE capability can be optionally supported by the UE, and whether to support the capability and the combination (X,Y) are explicitly reported to the BS.

[Table 11-3]

| Index | Feature group | Components |
|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for 60kHz with NCP<br>- 11OFDM symbols for 120kHz<br>Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. |
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(l), 0<=l<=13 is generated, where b(l)=1 if symbol l of any slot is part of a monitoring occasion, b(l)=0 otherwise. The first span in the span pattern begins at the smallest l for which b(l)=1. The next span in the span pattern begins at the smallest l not included in the previous span(s) for which b(l)=1. The span duration is max{maximum value<br>of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary. |

(continued)

| Index | Feature group | Components |
|---|---|---|
| | | For the set of monitoring occasions which are within the same span: |
| | | • Processing one unicast DCI scheduling DL and one unicast DCI scheduling UL per scheduled CC across this set of monitoring occasions for FDD |
| | | • Processing one unicast DCI scheduling DL and two unicast DCI scheduling UL per scheduled CC across this set of monitoring occasions for TDD |
| | | • Processing two unicast DCI scheduling DL and one unicast DCI scheduling UL per scheduled CC across this set of monitoring occasions for TDD |
| | | The number of different start symbol indices of spans for all PDCCH monitoring occasions per slot, including PDCCH |
| | | monitoring occasions of FG-3-1, is no more than floor(14/X) (X is minimum among values reported by UE). |
| | | The number of different start symbol indices of PDCCH monitoring occasions per slot including PDCCH monitoring occasions of FG-3-1, is no more than 7. |
| | | The number of different start symbol indices of PDCCH monitoring occasions per half-slot including PDCCH monitoring occasions of FG-3-1 is no more than 4 in SCell. |

The UE may report whether to support UE capability 2 and/or UE capability 3 and a relevant parameter to the BS. The BS may allocate time axis resources for the common search space and the UE-specific search space on the basis of the UE capability. In the resource allocation, the BS may not place the MO at the location at which the UE cannot perform monitoring.

[PDCCH: BD/CCE limit]

If a plurality of search space sets are configured in the UE, a method of determining a search space set which the UE should monitor may consider the following conditions.

If the UE receives a configuration of a value of monitoringCapabilityConfig-r16 which is higher-layer signaling as r15monitoringcapability, the UE defines the number of PDCCH candidates which can be monitored and a maximum value for the number of CCEs included in entire search spaces (indicating a set of entire CCE sets corresponding to a union area of a plurality of search space sets). When the UE receives a configuration of a value of monitoringCapabilityConfig-r16 as r16monitoringcapability, the UE may define the number of PDCCH candidates which can be monitored and a maximum value for the number of CCEs included in entire search spaces (indicating entire CCE sets corresponding to a union area of a plurality of search space sets) for each span.

[Condition 1: limits on maximum number of PDCCH candidates]

In a cell in which subcarrier spacing is configured as $15 \cdot 2^\mu$ kHz, the maximum number $M^\mu$ of PDCCH candidates which the UE can monitor follows [Table 12-1] when it is defined on the basis of a slot or [Table 12-2] below when it is defined on the basis of a span, according to the configuration value of higher-layer signaling as described above.

[Table 12-1]

| $\mu$ | Maximum number of monitored PDCCH candidates per slot and per serving cell $M^\mu$ |
|---|---|
| 0 | 44 |
| 1 | 36 |
| 2 | 22 |
| 3 | 20 |

[Table 12-2]

| $\mu$ | Maximum number $M^\mu$ of monitored PDCCH candidates per span for combination (*X,Y*) and per serving cell | | |
|---|---|---|---|
| | (2, 2) | (4, 3) | (7, 3) |
| 0 | 14 | 28 | 44 |
| 1 | 12 | 24 | 36 |

[Condition 2: limits on maximum number of CCEs]

In a cell in which subcarrier spacing is configured as $15 \cdot 2^\mu$ kHz, the maximum number $C^\mu$ of CCEs included in the entire search spaces (indicating a set of entire CCE sets corresponding to a union area of a plurality of search space sets) follows [Table 12-3] when it is defined on the basis of a slot or [Table 12-5] below when it is defined on the basis of a span., according to the configuration value of higher-layer signaling as described above.

[Table 12-3]

| $\mu$ | Maximum number of non-overlapped CCEs per slot and per serving cell $C^\mu$ |
|---|---|
| 0 | 56 |
| 1 | 56 |
| 2 | 48 |
| 3 | 32 |

[Table 12-4]

| $\mu$ | Maximum number $C^\mu$ of non-overlapped CCEs per span for combination (X, Y) and per serving cell | | |
|---|---|---|---|
| | (2, 2) | (4, 3) | (7, 3) |
| 0 | 18 | 36 | 56 |
| 1 | 18 | 36 | 56 |

For convenience of description, a situation satisfying both conditions 1 and 2 at a specific time point is defined as "condition A". Accordingly, not satisfying condition A may mean that at least one of conditions 1 and 2 is not satisfied.

[PDCCH: Overbooking]

Condition A may not be satisfied at a specific time point according to a configuration of search space sets by the BS. If condition A is not satisfied at a specific time point, the UE may select and monitor only some of the search space sets configured to satisfy condition A at the corresponding time point, and the BS may transmit the PDCCH through the selected search space sets.

The following method may be applied as a method of selecting some of all the configured search space sets.

If condition A for the PDCCH is not satisfied at a specific time point (slot), the UE (or the BS) may select a search space set of which a search space type is configured as a common-search space among search space sets existing at the corresponding time point in preference to a search space set of which a search space type is configured as a UE-specific search space.

If search space sets configured as the common-search space are all selected (that is, if condition A is satisfied even after all search spaces configured as the common-search space are selected), the UE (or BS) may select search space sets configured as the UE-specific search space. At this time, if the number of search space sets of configured as the UE-specific search space is plural, a search space set having a lower search space set index may have a higher priority. UE-specific search space sets may be selected within a range in which condition A is satisfied in consideration of the priority.

[QCL, TCI state]

In the wireless communication system, one or more different antenna ports (or replaced with one or more channels, signals, and combinations thereof, but commonly referred to as different antenna ports for convenience in the following description of the disclosure) may be associated by a quasi co-location (QCL) configuration shown in [Table 13] below. The TCI state is to inform of a QCL relation between a PDCCH (or a PDCCH DMRS) and another RS or channel, and a reference antenna port A (reference RS #A) and another purpose antenna port B (target RS #B) which are quasi co-located (QCLed) means that the UE is allowed to apply some or all of large-scale channel parameters estimated in the antenna port A to channel measurement from the antenna port B. The QCL is required to associate different parameters according to conditions such as 1) time tracking influenced by average delay and delay spread, 2) frequency tracking influenced by Doppler shift and Doppler spread, 3) radio resource management (RRM) influenced by an average gain, and 4) beam management (BM) influenced by a spatial parameter. Accordingly, NR supports four types of QCL relations shown in [Table 13] below.

[Table 13]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

A spatial RX parameter may refer to some or all of various parameters such as angle of arrival (AoA), power angular spectrum (PAS) of AoA, angle of departure (AoD), PAS of AoD, transmit/receive channel correlation, transmit/receive beamforming, and spatial channel correlation.

The QCL relation can be configured in the UE through RRC parameter TCI-state and QCL-Info as shown in [Table 14] below. Referring to [Table 14] below, the BS may configure one or more TCI states in the UE and inform the UE of a maximum of two QCL relations (qcl-Type 1 and qcl-Type 2) for an RS referring to an ID of the TCI state, that is, a target RS. At this time, each piece of the QCL information (QCL-Info) included in the TCI state includes a serving cell index and a BWP index of a reference RS indicated by the corresponding QCL information, a type and an ID of the reference RS, and the QCL type as shown in [Table 13] above.

【Table 14】

TCI-State ::=                                      SEQUENCE {

    tci-StateId                                      TCI-StateId,

    (ID of corresponding TCI state)

    qcl-Type1                                      QCL-Info,

    (QCL information of first reference RS of RS (target RS) referring to corresponding TCI state ID)

    qcl-Type2                                      QCL-Info

              OPTIONAL,     -- Need R

    (QCL information of second reference RS of RS (target RS) referring to corresponding TCI state ID)

    ...

}


QCL-Info ::=                                      SEQUENCE {

    cell

    ServCellIndex                          OPTIONAL,     -- Need R

    (serving cell index of reference RS indicated by corresponding QCL information)

    bwp-Id                                      BWP-Id

```
                                        OPTIONAL, -- Cond CSI-RS-Indicated

    (BWP index of reference RS indicated by corresponding QCL information)

    referenceSignal                                    CHOICE {

        csi-rs

    NZP-CSI-RS-ResourceId,

        ssb

    SSB-Index

        (one of CSI-RSI ID or SSB ID indicated by corresponding QCL

information)

    },

    qcl-Type

    ENUMERATED {typeA, typeB, typeC, typeD},

    ...

}
```

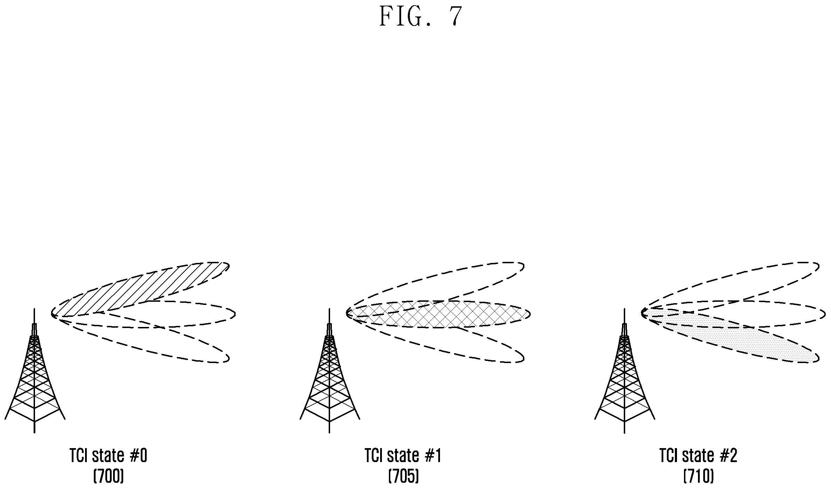

FIG. 7 illustrates an example of BS beam allocation according to a TCI state configuration according to an embodiment of the disclosure.

Referring to FIG. 7, the BS may transmit information on N different beams to the UE through N different TCI states. For example, when N=3 as illustrated in FIG. 7, the BS may notify that a qcl-Type 2 parameter included in three TCI states 700, 705, and 710 is associated with a CSI-RS or SSB corresponding to different beams to be configured as QCL type D and antenna ports referring to the different TCI states 700, 705, and 710 are associated with different spatial Rx parameters, that is, different beams.

[Table 15-1] to [Table 15-5] below show valid TCI state configurations according to the target antenna port type.

[Table 15-1] shows valid TCI state configurations when the target antenna port is a CSI-RS for tracking (TRS). The TRS is an NZP CSI-RS for which a repetition parameter is not configured and trs-Info is configured as true among CSI-RSs. The third configuration in [Table 15-1] may be used for an aperiodic TRS.

[Table 15-1]

| Valid TCI state Configuration | DL RS 1 | qcl-Type 1 | DL RS 2 (if configured) | qcl-Type 2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |

(continued)

| Valid TCI state Configuration | DL RS 1 | qcl-Type 1 | DL RS 2 (if configured) | qcl-Type 2 (if configured) |
|---|---|---|---|---|
| 3 | TRS (periodic) | QCL-TypeA | TRS (same as DL RS 1) | QCL-TypeD |

[Table 15-2] shows valid TCI state configurations when the target antenna port is a CSI-RS for CSI. The CSI-RS for CSI is an NZP CSI-RS for which a parameter (for example, a repetition parameter) indicating repetition is not configured and trs-Info is not configured as true among the CSI-RSs.

[Table 15-2]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

[Table 15-3] shows valid TCI state configurations when the target antenna port is a CSI-RS for beam management (BM) (that is, the same meaning as a CSI-RS for L1 RSRP reporting). The CSI-RS for BM is an NZP CSI-RS for which a repetition parameter is configured to have a value of on or off and trs-Info is not configured as true.

[Table 15-3]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH | QCL-TypeC | SS/PBCH block | QCL-TypeD |

[Table 15-4] shows valid TCI state configurations when the target antenna port is a PDCCH DMRS.

[Table 15-4]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

[Table 15-5] shows valid TCI state configurations when the target antenna port is a PDCCH DMRS.

[Table 15-5]

| Valid TCI state Configuration | DL RS 1 | qcl-Type 1 | DL RS 2 (if configured) | qcl-Type 2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

In a representative QCL configuration method by [Table 15-1] to [Table 15-5], the target antenna port and the reference antenna port for each step are configured and operated as "SSB" -> "TRS" -> "CSI-RS for CSI, CSI-RS for BM, PDCCH DMRS, or PDSCH DMRS". Through this, it is possible to link statistical characteristics that can be measured from SSB and TRS to each antenna port to assist the terminal's receiving operation.

[Regarding PDCCH: TCI state]

TCI state combinations which can be applied to the PDCCH DMRS antenna port may be as shown in [Table 16] below. In [Table 16], a fourth row is a combination assumed by the UE before the RRC configuration, and configurations after RRC are impossible.

[Table 16]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

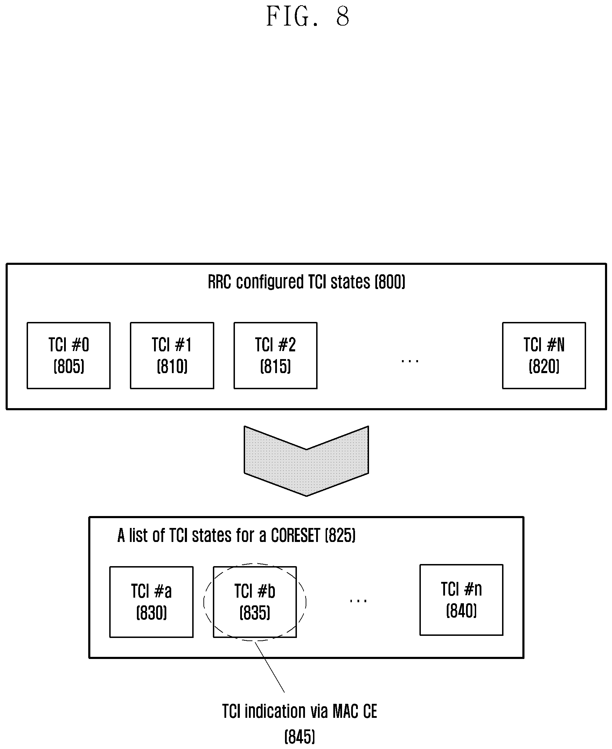

In NR, a hierarchical signaling method as illustrated in FIG. 8 is supported for dynamic allocation for a PDCCH beam. FIG. 8 illustrates an example of a method of allocating TCI states for a PDCCH in a wireless communication system according to an embodiment of the disclosure.
Referring to FIG. 8, the BS may configure N TCI states 805, 810, ..., 820 in the UE through RRC signaling 800 and configure some thereof as TCI states for the CORESET as indicated by reference numeral 825. Thereafter, the BS may indicate one of the TCI states 830, 835, and 840 for the CORESET to the UE through MAC CE signaling as indicated by reference numeral 845. Subsequently, the UE may receive a PDCCH on the basis of beam information included in the TCI states indicated by the MAC CE signaling.

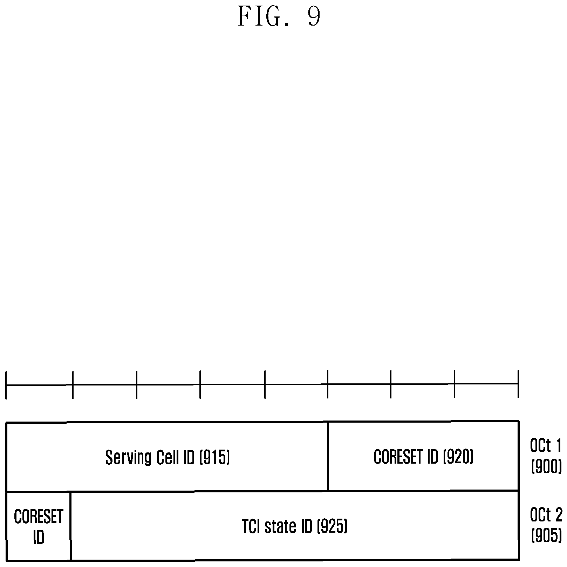

FIG. 9 illustrates a TCI indication MAC CE indication signaling structure for a PDCCH DMRS according to an embodiment of the disclosure. Referring to FIG. 9, TCI indication MAC CE signaling for the PDCCH DMRS may consist of 2 bytes (16 bits) (e.g., Oct 1 (900), Oct 2 (905)), and may include a serving cell ID 915 of 5 bits, a CORESET ID 920 of 4 bits, and a TCI state ID 925 of 7 bits.

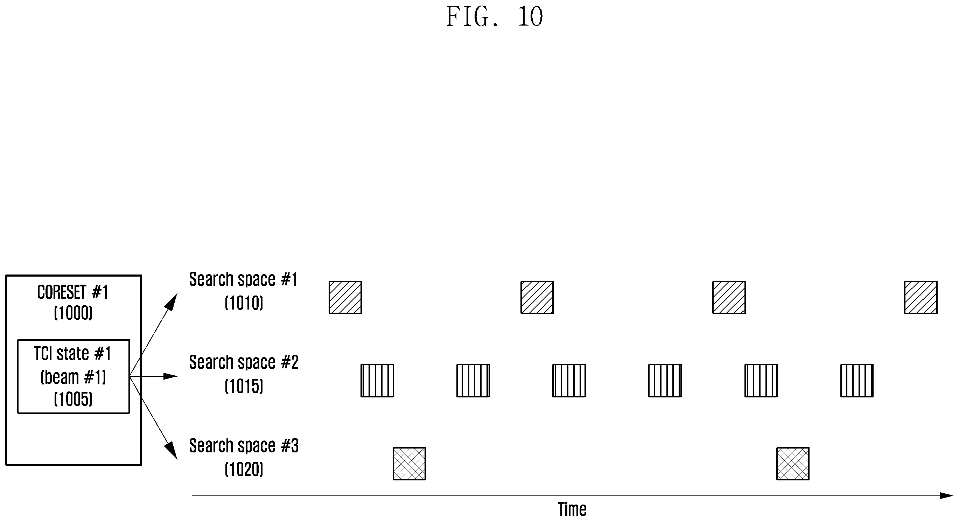

FIG. 10 illustrates an example of a CORESET and search space beam configuration according to an embodiment of the disclosure.
Referring to FIG. 10, the BS may indicate one of the TCI state list included in the configuration of a CORSET 1000 through MAC CE signaling as indicated by reference numeral 1005. Thereafter, before another TCI state is indicated to the corresponding CORSET through other MAC CE signaling, the UE may consider that the same QCL information (beam #1) 1005 is applied to one or more search spaces 1010, 1015, and 1020 associated with the CORESET. The PDCCH beam allocation method has difficulty in indicating a beam change earlier than a MAC CE signaling delay and has a disadvantage of applying the same beam to all CORESETs regardless of a search space characteristic, and thus makes flexible PDCCH beam operation difficult. Hereinafter, embodiments of the disclosure provide a more flexible PDCCH beam configuration and operation method. In the following embodiments of the disclosure, some distinguished examples are provided for convenience of description, but they are not exclusive and can be applied through a proper combination thereof according to circumstances.
The BS may configure one or a plurality of TCI states for a specific CORESET in the UE and activate one of the configured TCI states through a MAC CE activation command. For example, {TCI state#0, TCI state#1, TCI state#2} are configured in CORESET #1 as the TCI states, and the BS may transmit a command for activating TCI state#0 assumed as the TCI state for CORESET #1 to the UE through the MAC CE. The UE may correctly receive a DMRS of the corresponding CORESET on the basis of QCL information within the activated TCI state by means of the activation command for the TCI state received through the MAC CE.
When the UE does not receive the MAC CE activation command for the TCI state of CORESET #0 for the CORESET (CORESET #0) having an index of 0, the UE may assume that a DMRS transmitted in CORESET #0 is QCLed with an SS/PBCH block identified in an initial access process or a non-contention-based random access process which is not triggered by a PDCCH command.
When the UE does not receive a configuration of the TCI state for CORESET #X or the UE receives the configuration of one or more TCI states but does not receive a MAC CE activation command for activating one thereof, the UE may assume that a DMRS transmitted in CORESET #X is QCLed with an SS/PBCH block identified in an initial access process.

[PDCCH: QCL Prioritization Rule Related]

Hereinafter, an operation of QCL prioritization to a PDCCH will be described in detail.

When a UE operates with carrier aggregation in a single cell or band, and a plurality of control resource sets existing in an activated bandwidth part of a single cell or a plurality of cells overlap in time while having the same or different QCL-TypeD characteristics in a specific PDCCH monitoring occasion, the UE may select the specific control resource set according to the operation of the QCL prioritization and monitor control resource sets having the same QCL-TypeD characteristics as the corresponding control resource set. In other words, when the plurality of control resource sets overlap in time, only one QCL-TypeD characteristic may be received. In this case, criteria for the QCL prioritization may be as follows.

- Criterion 1. A control resource set associated with a common search section with the lowest index within a cell corresponding to the lowest index among cells including the common search section
- Criterion 2. A control resource set associated with a UE-specific search section with the lowest index within a cell corresponding to the lowest index among cells including the UE-specific search section

As described above, for the respective criteria, the following criteria are applied when the corresponding criteria are not satisfied. For example, when the control resource sets overlap in time in the specific PDCCH monitoring occasion, if all the control resource sets are not associated with the common search section but associated with the UE-specific search section, i.e., if criterion 1 is not satisfied, the UE may apply criterion 2 instead of applying the criterion 1.

When the UE selects the control resource set by the above-described criteria, the UE may additionally consider the following two items regarding QCL information configured in the control resource set. First, when control resource set 1 has CSI-RS 1 as a reference signal having a QCL-TypeD relationship, a reference signal which has the QCL-TypeD relationship with CSI-RS 1 is SSB1, and a reference signal which has the QCL-TypeD relationship with another control resource set 2 is SSB 1, the UE may consider these two control resource sets 1 and 2 as having different QCL-TypeD characteristics. Second, when the control resource set 1 has CSI-RS 1 configured in cell 1 as the reference signal having the QCL-TypeD relationship, the CSI-RS 1 has the SSB 1 as the reference signal having the QCL-TypeD relationship, the control resource set 2 has CSI-RS 2 configured in cell 2 as the reference signal having the QCL-TypeD relationship, and the CSI-RS 2 has the same SSB 1 as the reference signal having the QCL-TypeD relationship, the UE may consider the two control resource sets as having the same QCL-TypeD characteristics.

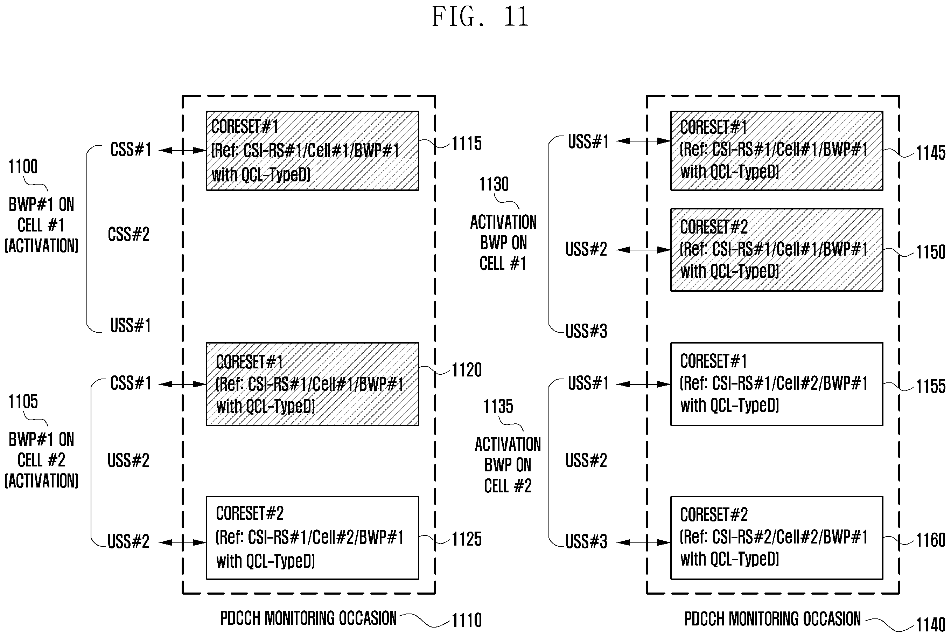

FIG. 11 is a diagram for describing a method for selecting a receivable control resource set in consideration of priorities when the UE receives the downlink control channel in the wireless communication system according to an embodiment of the present disclosure.

For example, the UE may be configured to receive a plurality of control resource sets that overlap in time a specific PDCCH monitoring occasion 1110, and the plurality of control resource sets may be associated with a common search space or a UE-specific search space for a plurality of cells. Within the corresponding PDCCH monitoring occasion, control resource set #1 1115 associated with common search section #1 may exist in bandwidth part #1 1100 of cell #1, and control resource set #1 1120 associated with the common search section #1 and control resource set #2 1125 associated with UE-specific search section #2 may exist in bandwidth part #1 1105 of cell #2. The control resource sets 1115 and 1120 may have the QCL-TypeD relationship with CSI-RS resource #1 configured in bandwidth part #1 of cell #1, and the control resource set 1125 may have the QCL-TypeD relationship with the CSI-RS resource #1 configured in the bandwidth part #1 of cell #2. Therefore, when the criterion 1 is applied to the corresponding PDCCH monitoring occasion 1110, the UE may receive all other control resource sets having the reference signal of the same QCL-TypeD such as the control resource set #1 1115. Therefore, the UE may receive the control resource sets 1115 and 1120 in the corresponding PDCCH monitoring occasion 1110. As another example, the UE may be configured to receive a plurality of control resource sets that overlap in time in a specific PDCCH monitoring occasion 1140, and the plurality of control resource sets may be associated with a common search space or a UE-specific search space for a plurality of cells. Within the corresponding PDCCH monitoring occasion, control resource set #1 1145 associated with UE-specific search section #1 and control resource set #2 1150 associated with UE-specific search section #2 may exist in bandwidth part #1 1130 of cell #1, and control resource set #1 1155 associated with UE-specific search section #1 and control resource set #2 1160 associated with UE-specific search section #3 may exist in bandwidth part #1 1135 of cell #2. The control resource sets 1145 and 1150 may have the QCL-TypeD relationship with the CSI-RS resource #1 configured in the bandwidth part #1 of the cell #1, the control resource set 1155 may have the QCL-TypeD relationship with the CSI-RS resource #1 configured in the bandwidth part #1 of the cell #2, and the control resource set 1160 may have the QCL-TypeD relationship with the CSI-RS resource #2 configured in the bandwidth part #1 of the cell #2. However, when the criterion 1 is applied to the corresponding PDCCH monitoring occasion 1140, there is no common search section, so the criterion 2 as the next criterion may be applied. Therefore, when the criterion 2 is applied to the corresponding PDCCH monitoring occasion 1140, the UE may receive all other control resource sets having the reference signal of the QCL-TypeD such as the control resource set 1145. Therefore, the UE may receive the control resource sets 1145 and 1150 in the corresponding PDCCH monitoring occasion 1140.

[PDSCH: TCI state activation MAC-CE]

Next, the beam setting method for PDSCH is described.

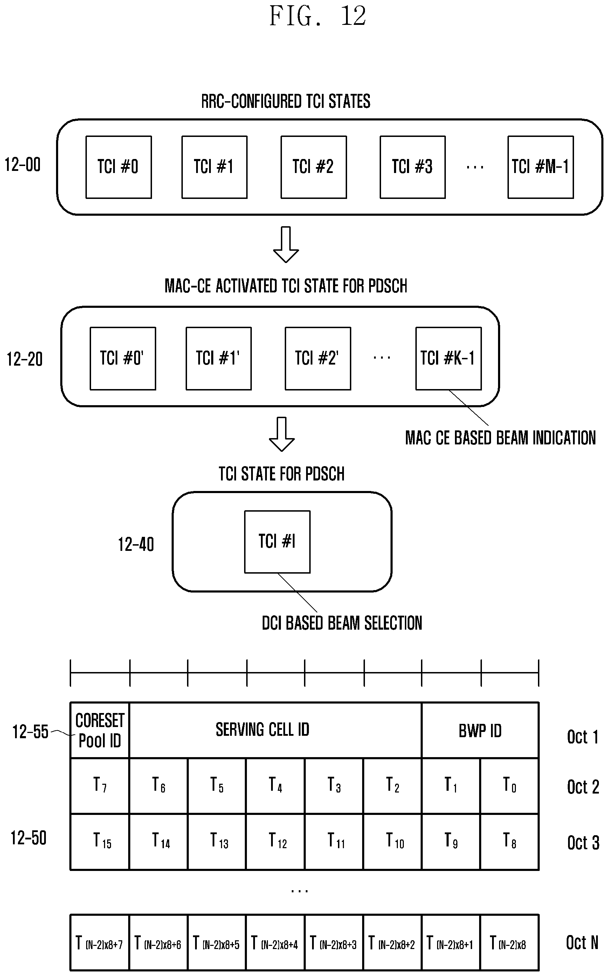

FIG. 12 illustrates a process for beam setting and activation of PDSCH according to an embodiment of the disclosure. A list of TCI states for PDSCH can be indicated through a list of upper layers such as RRC (12-00). The list of TCI states can be indicated, for example, as tci-StatesToAddModList and/or tci-StatesToReleaseList in the PDSCH-Config IE for each BWP. Next, some of the list of TCI states can be activated through MAC-CE (12-20). The maximum number of TCI states to be activated can be determined according to the capability reported by the terminal. One of some TCI states activated through MAC-CE can be indicated through DCI (12-40). (12-50) illustrates an example of a MAC-CE structure for PDSCH TCI state activation/deactivation.

The meaning of each field in the MAC CE and values that can be set for each field are as follows.

---

- **Serving Cell ID** (serving cell identifier): This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;

- **BWP ID** (BWP identifier): This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;

- $T_i$ (TCI state identifier): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with $T_i$ field set to 1 shall be mapped to the codepoint value 0, second TCI State with Ti field set to 1 shall be mapped to the codepoint value 1 and so on. The maximum number of activated TCI states is 8;

- **CORESET Pool ID** (CORESET Pool ID identifier): This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

---

[Regarding terminal capability reporting]

In the LTE and 5G, the UE may perform a procedure for reporting a capability supported by the UE to the corresponding BS in the state in which the UE is connected to a serving BS. In the following description, this is referred to as a UE capability report.

The BS may transmit a UE capability enquiry message that makes a request for a capability report to the UE in the connected state. The message may include a UE capability request for each radio access technology (RAT) type of the BS. The request for each RAT type may include supported frequency band combination information. In the case of the UE capability enquiry message, a plurality of UE capabilities for respective RAT types may be requested through one RRC message container transmitted by the BS or the BS may insert the UE capability enquiry message including the UE capability request for each RAT type multiple times and transmit the same to the UE. That is, the UE capability enquiry is repeated multiple times within one message and the UE may configure a UE capability information message corresponding thereto and report the same multiple times. In the next-generation mobile communication system, a UE capability request for NR, LTE, E-UTRA - NR dual connectivity (EN-DC), and multi-RAT dual connectivity (MR-DC) may be made. The UE capability enquiry message is generally transmitted initially after the UE is connected to the BS, but may be requested at any time when the BS needs the same.

The UE receiving the request for the UE capability report from the BS in the above step may configure a UE capability according to RAT type and band information requested by the BS. A method by which the UE configures the UE capability in a wireless communication system (for example, 5G or NR system) according to an embodiment of the disclosure is described below.

1. When the UE receives a list of LTE and/or NR bands from the BS through a UE capability request, the UE configures a band combination (BC) for EN-DC and NR stand alone (SA). That is, the UE configures a candidate list of BCs for EN-DC and NR SA on the basis of requested bands in FreqBandList. The bands sequentially have priorities as stated in FreqBandList.

2. When the BS sets a "eutra-nr-only" flag or an "eutra" flag and makes a request for the UE capability report, the UE completely removes NR SA BCs from the configured candidate list of BCs. Such an operation may occur only when the LTE BS (eNB) makes a request for an "eutra" capability.

3. Thereafter, the UE removes fallback BCs from the candidate list of BCs configured in the above stage. The fallback BC is a BC which can be obtained by removing a band corresponding to at least one SCell from a predetermined BC, and a BC before the removal of the band corresponding at least one SCell can cover the fallback BC and thus the fallback BC can be omitted. This stage is applied to MR-DC, that is, LTE bands. BCs left after the stage are a final "candidate BC list".

4. The UE selects BCs suitable for a requested RAT type in the final "candidate BC list" and selects BCs to be reported. In this stage, the UE configures supportedBandCombinationList according to a determined order. That is, the UE configures BCs and UE capability to be reported according to an order of a preset rat-Type (nr ->eutra-nr ->eutra). Further, the UE configures featureSetCombination for the configured supportedBandCombinationList and configures a list of "candidate feature set combination" in a candidate BC list from which a list for fallback BCs (including capability at the same or lower stage) is received. The "candidate feature set combination" may include all feature set combinations for NR and EUTRA-NR BCs, and may be acquired from a feature set combination of UE-NR-Capabilities and UE-MRDC-Capabilities containers.

5. When the requested RAT Type is eutra-nr and influences, featureSetCombinations are included in all of the two containers of UE-MRDC-Capabilities and UE-NR-Capabilities. However, the NR feature set includes only UE-NR-Capabilities.

After configuring the UE capability, the UE may transfer a UE capability information message including the UE capability to the BS. The BS may perform scheduling for the corresponding UE and transmission/reception management on the basis of the UE capability received from the UE.

[Regarding NC-JT]

According to an embodiment of the disclosure, in order to receive a PDSCH from a plurality of TRPs, the UE may use non-coherent joint transmission (NC-JT).

A 5G wireless communication system may support all of the service having very short transmission latency and the service requiring a high connectivity density as well as the service requiring a high transmission rate unlike the conventional system. In a wireless communication network including a plurality of cells, transmission and reception points (TRPs), or beams, cooperative communication (coordinated transmission) between respective cells, TRPs, or/and beams may satisfy various service requirements by increasing the strength of a signal received by the UE or efficiently controlling interference between the cells, TRPs, or/and beams.

Joint transmission (JT) is a representative transmission technology for the cooperative communication and may increase the strength of a signal received by the UE or throughput by transmitting signals to one UE through different cells, TRPs, or/and beams. At this time, a channel between each cell, TRP, or/and beam and the UE may have different characteristics, and particularly, non-coherent joint transmission (NC-JT) supporting non-coherent precoding between respective cells, TRPs, or/and beams may need individual precoding, MCS, resource allocation, and TCI indication according to the channel characteristics for each link between each cell, TRP, or/and beam and the UE.

The NC-JT may be applied to at least one of a downlink data channel (physical downlink shared channel (PDSCH)), a downlink control channel (physical downlink control channel (PDCCH)), an uplink data channel (physical uplink shared channel (PUSCH)), and an uplink control channel (Physical uplink control channel (PUCCH)). In PDSCH transmission, transmission information such as precoding, MCS, resource allocation, and TCI may be indicated through DL DCI, and should be independently indicated for each cell, TRP, or/and beam for the NC-JT. This is a main factor that increases payload required for DL DCI transmission, which may have a bad influence on reception performance of a PDCCH for transmitting the DCI. Accordingly, in order to support JT of the PDSCH, it is required to carefully design tradeoff between an amount of DCI information and reception performance of control information.

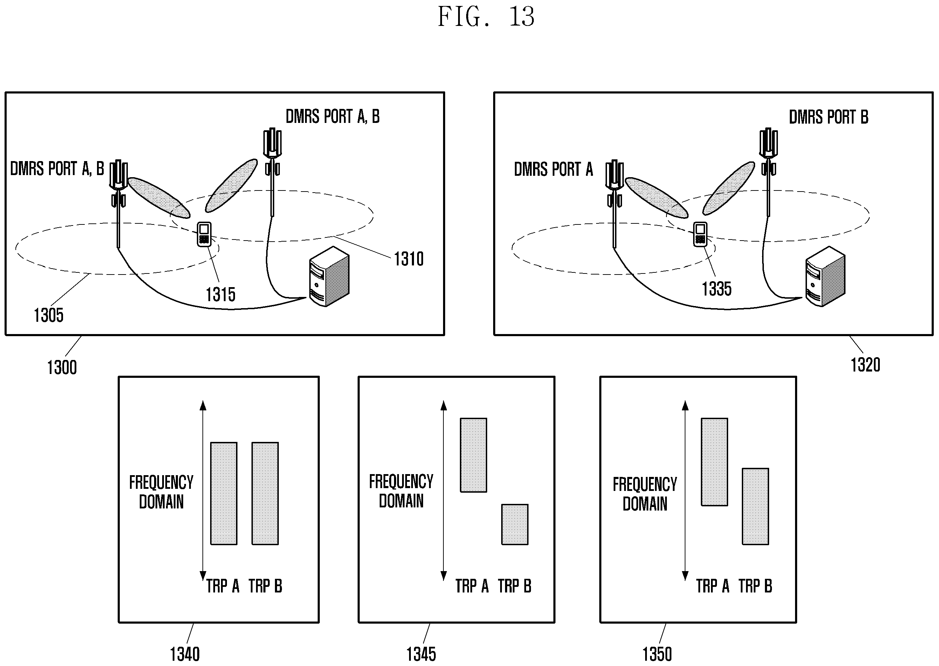

FIG. 13 illustrates a configuration of antenna ports and an example of resource allocation for transmitting a PDSCH using cooperative communication in a wireless communication system according to an embodiment of the disclosure.

Referring to FIG. 13, the example for PDSCH transmission is described for each scheme of joint transmission (JT), and examples for allocating radio resources for each TRP are described.

Referring to FIG. 13, an example 1300 of coherent joint transmission (C-JT) supporting coherent precoding between respective cells, TRPs, or/and beams is illustrated.

In the case of C-JT, a TRP A 1305 and a TRP B 1310 transmit single data (PDSCH) to a UE 1315, and the plurality of TRPs may perform joint precoding. This may mean that the TRP A 1305 and the TPR B 1310 transmit DMRSs through the same DMRS ports in order to transmit the same PDSCH. For example, the TRP A 1305 and the TPR B 1310 may transmit DMRSs to the UE through a DMRS port A and a DMRS port B, respectively. In this case, the UE may receive one piece of DCI information for receiving one PDSCH demodulated on the basis of the DMRSs transmitted through the DMRS port A and the DMRS port B.

FIG. 13 illustrates an example 1320 of non-coherent joint transmission (NC-JT) supporting non-coherent precoding between respective cells, TRPs, or/and beams for PDSCH transmission.

In the case of NC-JT, the PDSCH is transmitted to a UE 1335 for each cell, TPR, or/and beam, and individual precoding may be applied to each PDSCH. Respective cells, TRPs, or/and beams may transmit different PDSCHs or different PDSCH layers to the UE, thereby improving throughput compared to single cell, TRP, or/and beam transmission. Further, respective cells, TRPs, or/and beams may repeatedly transmit the same PDSCH to the UE, thereby improving reliability compared to single cell, TRP, or/and beam transmission. For convenience of description, the cell, TRP, or/and beam are commonly called a TRP.

At this time, various wireless resource allocations such as the case 1340 in which frequency and time resources used by a plurality of TRPs for PDSCH transmission are all the same, the case 1345 in which frequency and time resources used by a plurality of TRPs do not overlap at all, and the case 1350 in which some of the frequency and time resources used by a plurality of TRPs overlap each other may be considered.

In order to support NC-JT, DCIs in various forms, structures, and relations may be considered to simultaneously allocate a plurality of PDSCHs to one UE.

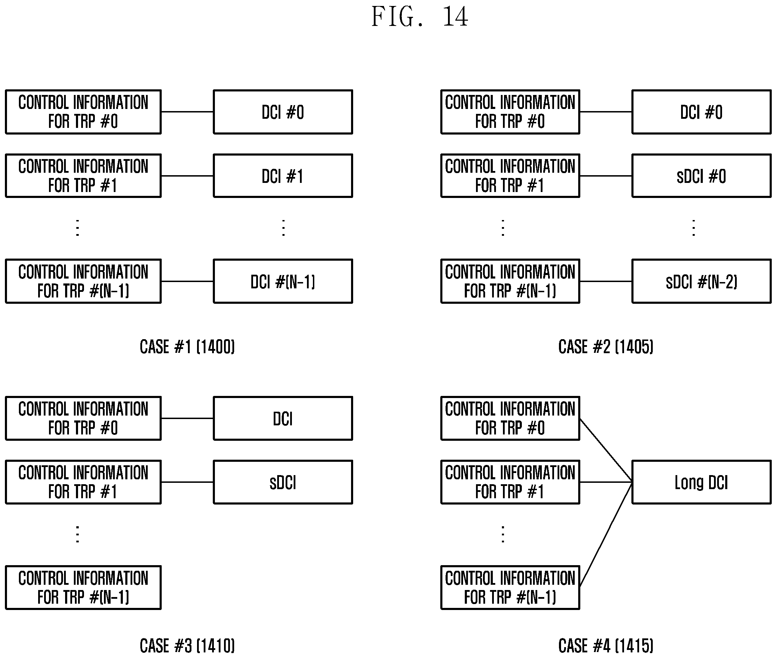

FIG. 14 illustrates an example for a configuration of downlink control information (DCI) for NC-JT in which respective TRPs transmit different PDSCHs or different PDSCH layers to the UE in a wireless communication system according to an embodiments of the disclosure.

Referring to FIG. 14, case #1 1400 is an example in which control information for PDSCHs transmitted from (N-1) additional TRPs is transmitted independently from control information for a PDSCH transmitted by a serving TRP in a situation in which (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP #(N-1)) through independent DCIs (DCI #0 to DCI #(N-1)). Formats between the independent DCIs may be the same as or different from each other, and payload between the DCIs may also be the same as or different from each other. In case #1, a degree of freedom of PDSCH control or allocation can be completely guaranteed, but when respective pieces of DCI are transmitted by different TRPs, a difference between DCI coverages may be generated and reception performance may deteriorate.

Case #2 1405 is an example in which pieces of control information for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI #0 that is control information for a PDSCH transmitted from the serving TRP (TRP #0) may include all information elements of DCI format 1_0, DCI format 1_1, and DCI format 1_2, but shortened DCIs (hereinafter, referred to as sDCIs) (sDCI #0 to sDCI #(N-2)) that are control information for PDSCHs transmitted from the cooperative TRPs (TRP #1 to TRP #(N-1)) may include only some of the information elements of DCI format 1_0, DCI format 1_1, and DCI format 1_2. Accordingly, the sDCI for transmitting control information of PDSCHs transmitted from cooperative TPRs has smaller payload compared to the normal DCI (nDCI) for transmitting control information related to the PDSCH transmitted from the serving TRP, and thus can include reserved bits compared to the nDCI.

In case #2, a degree of freedom of each PDSCH control or allocation may be limited according to content of information elements included in the sDCI, but reception capability of the sDCI is better than the nDCI, and thus a probability of the generation of difference between DCI coverages may become lower.

Case #3 1410 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP #0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information such as frequency domain resource assignment and time domain resource assignment of the cooperative TRPs and the MCS. In addition, information that is not included in the sDCI such as a BWP indicator and a carrier indicator may follow DCI (DCI #0, normal DCI, or nDCI) of the serving TRP.

In case #3 1410, a degree of freedom of PDSCH control or allocation may be limited according to content of the information elements included in the sDCI but reception performance of the sDCI can be controlled, and case #3 1610 may have smaller complexity of DCI blind decoding of the UE compared to case #1 1400 or case #2 1405.

Case #4 1415 is an example in which control information for PDSCHs transmitted from (N-1) additional TRPs is transmitted in DCI (long DCI) that is the same as that of control information for the PDSCH transmitted from the serving TRP in a situation in which different (N-1) PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP # (N-1)) through single DCI. In case #4 1415, complexity of DCI blind decoding of the UE may not be increased, but a degree of freedom of PDSCH control or allocation may be low since the number of cooperative TRPs is limited according to long DCI payload restriction.

In the following description and embodiments, sDCI may refer to various auxiliary DCIs such as shortened DCI, secondary DCI, or normal DCI (DCI formats 1_0 to 1_1 described above) including PDSCH control information transmitted in a cooperative TRP, and unless a special limitation is specified, the above description may be similarly applied to various auxiliary DCIs described above.

In the following description and embodiments, the above-described case #1 1400, case #2 1405, and case #3 1410 where one or more DCIs (PDCCHs) is used to support NC-JT may be distinguished by multiple PDCCH-based NC-JT, and the above-described case #4 1415 where the single DCI (PDCCH) is used to support the NC-JT may be distinguished by single PDCCH-based NC-JT. In the multiple PDCCH-based PDSCH transmission, a CORESET in which the DCI of a serving TRP (TRP#0) is scheduled and a CORESET in which the DCIs of cooperative TRPs (TRP#1 to TRP# (N-1)) are scheduled may be distinguished. As a method for distinguishing CORESETs, there may be a method for distinguishing through higher layer indicators for each CORESET, a method for distinguishing through a beam configuration for each CORESET, etc. In addition, in the single PDCCH-based NC-JT, instead of the single DCI scheduling multiple PDSCHs, a single PDSCH having a plurality of layers is scheduled, and the plurality of layers described above may be transmitted from a plurality of TRPs. In this case, a connection relationship between a layer and the TRP transmitting the corresponding layer may be indicated through a transmission configuration indicator (TCI) indication for the layer.

In the embodiments of the present disclosure, the "cooperative TRP" may be replaced with various terms such as "cooperative panel" or "cooperative beam" in actual application.

In the embodiments of the present disclosure, "when the NC-JT is applied" can be interpreted in various ways depending on situations, such as "when a UE receives one or more PDSCHs simultaneously in one BWP", "when a UE receives PDSCHs simultaneously in one BWP based on two or more transmission configuration indicator (TCI) indications", or "when a PDSCH received by a UE is associated with one or more DMRS port groups", but is used as one expression for convenience of description.

In the present invention, the wireless protocol structure for the NC-JT may be used in various ways depending on a TRP deployment scenario. For example, when there is no or small backhaul delay between the cooperative TRPs, a method (CA-like method) using a structure based on MAC layer multiplexing is possible. On the other hand, when the backhaul delay between cooperating TRPs is significantly large and cannot be ignored (e.g., when it takes more than 2 ms to exchange information such as CSI, scheduling, and HARQ-ACK between the cooperative TRPs), a method (DC-like method) that secures delay-robust characteristics using independent structures for each TRP from an RLC layer is possible.

A UE supporting C-JT/NC-JT may receive C-JT/NC-JT-related parameters or setting values, etc., from higher layer configuration and set RRC parameters of the UE based on the received C-JT/NC-JT-related parameters or setting values, etc. For the higher layer configuration, the UE may utilize UE capability parameters such as tci-StatePDSCH. Here, the UE capability parameters, such as the tci-StatePDSCH, may define TCI states for the purpose of PDSCH transmission, and the number of TCI states may be configured to 4, 8, 16, 32, 64, and 128 in FR1, and 64 and 128 in FR2. Among the configured number, up to 8 states, which may be indicated by 3 bits of a TCI field of the DCI through the MAC CE message, may be configured. The maximum value 128 means a value indicated by maxNumberConfiguredTCIstatesPerCC within the tci-StatePDSCH parameter included in the capability signaling of the UE. In this way, a series of configuration processes from the higher layer configuration to the MAC CE configuration may be applied to a beamforming indication or a beamforming change command for at least one PDSCH in one TRP.

[Multi-DCI-based Multi-TRP]

As an embodiment of the present disclosure, a multi-DCI-based multi-TRP transmission method will be described. The multi-DCI-based multi-TRP transmission method may configure a downlink control channel for NC-JT transmission based on multi-PDCCH.

When transmitting DCI for PDSCH schedule of each TRP, the NC-JT based on the multiple PDCCHs may have the CORESET or the search space distinguished for each TRP. The TRP-specific CORESET or search space can be configured as at least one of the following cases.

* CORESET-specific higher layer index configuration: The CORESET configuration information configured as the higher layer may include an index value, and the TRP transmitting the PDCCH in the corresponding CORESET may be distinguished by the configured CORESET-specific index value. In other words, in a set of CORESETs having the same higher layer index value, it may be considered that the same TRP transmits the PDCCH or that the PDCCH scheduling the PDSCH of the same TRP is transmitted. The above-described CORESET-specific index may be named as CORESETPoolIndex, and it may be considered that the PDCCH is transmitted from the same TRP for CORESETs with the same CORESETPoolIndex value set. For CORESETs having no CORESETPoolIndex value set, it may be considered that a default value of the CORESETPoolIndex is set, and the above-described default value may be 0.

- In the present disclosure, when the number of types of CORESETPoolIndex of each of the plurality of CORESETs included within PDCCH-Config as higher layer signaling exceeds 1, i.e., when each CORESET has different CORESETPoolIndexes, the UE may consider that the base station may use the multi-DCI-based multi-TRP transmission method.

- On the other hand, in the present disclosure, when the number of types of CORESETPoolIndex of each of the plurality of CORESETs included within the PDCCH-Config as the higher layer signaling is 1, i.e., when all the CORESETs have the same CORESETPoolIndex of 0 or 1, the UE may consider that the base station transmits the PDCCH using a single-TRP without using the multi-DCI-based multi-TRP transmission method.

* Multiple PDCCH-Config configurations: Multiple PDCCH-Configs are configured within one BWP, and each PDCCH-Config may include TRP-specific PDCCH configurations. That is, a list of TRP-specific CORESETs and/or a list of TRP-specific search spaces may be configured in one PDCCH-Config, and one or more CORESETs and one or more search spaces included in one PDCCH-Config may be considered to correspond to a specific TRP.
* CORESET beam/beam group configuration: The TRP corresponding to the corresponding CORESET may be distinguished through a beam or beam group configured for each CORESET. For example, when the same TCI state is configured to the plurality of CORESETs, the corresponding CORESETs may be considered to be transmitted through the same TRP, or the PDCCH that schedules the PDSCH of the same TRP may be considered to be transmitted in the corresponding CORESET.
* Search space beam/beam group configuration: The beam or beam group is configured for each search space, and thus, the TRPs for each search space may be distinguished. For example, when the same beam/beam group or TCI state is configured to the plurality of search spaces, the same TRP may be considered to transmit the PDCCH in the corresponding search space, or the PDCCH that schedules the PDSCH of the same TRP may be considered to be transmitted in the corresponding search space.

As described above, by distinguishing the CORESET or search space for each TRP, the PDSCH and HARQ-ACK information may be classified for each TRP, and thus, independent HARQ-ACK codebook generation and independent PUCCH resource use for each TRP are possible.

The above-described configurations may be independent for each cell or each BWP. For example, while two different CORESETPoolIndex values may be set on a PCell, the CORESETPoolIndex value may not be set on a specific SCell. In this case, it may be considered that NC-JT transmission is configured on the PCell, while the NC-JT transmission is not configured on the SCell where the CORESETPoolIndex value is not set.

A PDSCH TCI state activation/deactivation MAC-CE applicable to the multi-DCI-based multi-TRP transmission method may follow FIG. 12 described above. When the UE does not have the CORESETPoolIndexes configured for each of all the CORESETs within the PDCCH-Config as the higher layer signaling, the UE may ignore a CORESET Pool ID field 12-55 within the corresponding MAC-CE 12-50. When the UE may support the multi-DCI-based multi-TRP transmission method, i.e., when the UE has different CORESETPoolIndexes configured for each CORESET within the PDCCH-Config as the higher layer signaling, the UE may activate the TCI state within the DCI included in the PDCCH transmitted from the CORESETs having the same CORESETPoolIndex value as the CORESET Pool ID field 12-55 value within the corresponding MAC-CE 12-50. For example, when the value of the CORESET Pool ID field 12-55 within the corresponding MAC-CE 12-50 is 0, the TCI state within the DCI included in the PDCCH transmitted from the CORESETs having the CORESETPoolIndex of 0 may follow the activation information of the corresponding MAC-CE.

When the UE is configured by the base station to be able to use the multi-DCI-based multi-TRP transmission method, i.e., when the number of types of CORESETPoolIndex of each of the plurality of CORESETs included within the PDCCH-Config as the higher layer signaling exceeds 1 or when each CORESET has different CORESETPoolIndex, the UE may know that there are the following restrictions for PDSCHs scheduled from PDCCHs within each CORESET having two different CORESETPoolIndexes.

1) When the PDSCHs indicated from the PDCCHs within each CORESET having two different CORESETPoolIndexes overlap completely or partially, the UE may apply the TCI states indicated from each PDCCH to different CDM groups, respectively. That is, two or more TCI states may not be applied to one CDM group.
2) When the PDSCHs indicated from the PDCCHs within each CORESET having two different CORESETPoolIndexes overlap completely or partially, the UE may expect that the actual number of front-loaded DMRS symbols, the actual number of additional DMRS symbols, the positions of the actual DMRS symbols, and the DMRS types of each PDSCH will not be different from each other.
3) The UE may expect that the bandwidth parts indicated from the PDCCHs within each CORESET having two different CORESETPoolIndexes will be the same and the subcarrier spacing will also be the same.
4) The UE may expect that each PDCCH will completely include the information on the PDSCHs scheduled from the PDCCHs within each CORESET having two different CORESETPoolIndexes.

[Single-DCI-based Multi-TRP]

As an embodiment of the present disclosure, a single-DCI-based multi-TRP transmission method will be described. The single-DCI-based multi-TRP transmission method may configure a downlink control channel for NC-JT transmission based on single-PDCCH.
In the single DCI-based multi-TRP transmission method, PDSCHs transmitted by multi-TRP may be scheduled using one DCI. In this case, the number of TCI states may be used as a method for indicating the number of TRPs transmitting the corresponding PDSCH. That is, when the number of TCI states indicated in the DCI for scheduling the PDSCH is 2, it may be considered as single PDCCH-based NC-JT transmission, and when the number of TCI states is 1, it may be considered as single-TRP transmission. The TCI states indicated in the DCI may correspond to one or two of the TCI states activated by the MAC-CE. When the TCI states of the DCI correspond to two TCI states activated by the MAC-CE, a correspondence relationship between the TCI codepoint indicated in the DCI and the TCI states activated by the MAC-CE is established, and there may be two TCI states corresponding to the TCI codepoint which are activated by the MAC-CE.
For another example, when at least one of all the codepoints of the TCI state field within the DCI indicates two TCI states, the UE may consider that the base station may transmit the PDSCH based on the single-DCI-based multi-TRP method. In this case, at least one codepoint indicating two TCI states within the TCI state field may be activated via enhanced PDSCH TCI state activation/deactivation MAC-CE.

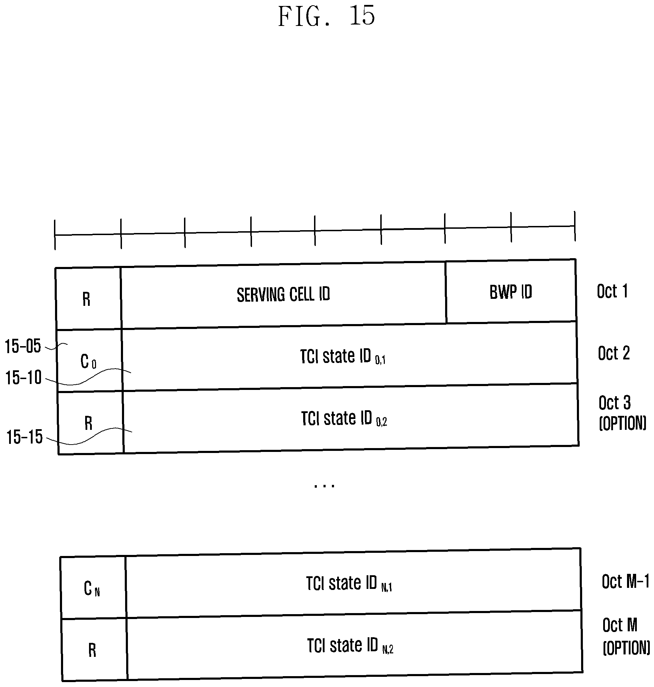

FIG. 15 is a diagram illustrating an enhanced PDSCH TCI state activation/deactivation MAC-CE structure according to an embodiment of the present disclosure. The meaning of each field within the corresponding MAC CE and the values that can be configured for each field are as follows.

- **Serving Cell ID:** This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2,* respectively;
- **BWP ID:** This field indicates a DL BWP for which the MAC CE applies as the codepoint of the DCI bandwidth part indicator field as specified in TS 38.212 [9]. The length of the BWP ID field is 2 bits;
- **$C_i$:** This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present;

(continued)

> - **TCI state ID$_{i,j}$**: This field indicates the TCI state identified by TCI-StateId as specified in TS 38.331 [5], where i is the index of the codepoint of the DCI Transmission configuration indication field as specified in TS 38.212 [9] and TCI state ID$_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state ID$_{i,j}$ fields, i.e. the first TCI codepoint with TCI state ID$_{0,1}$ and TCI state ID$_{0,2}$ shall be mapped to the codepoint value 0, the second TCI codepoint with TCI state ID$_{1,1}$ and TCI state ID$_{1,2}$ shall be mapped to the codepoint value 1 and so on. The TCI state ID$_{i,2}$ is optional based on the indication of the Ci field. The maximum number of activated TCI codepoint is 8 and the maximum number of TCI states mapped to a TCI codepoint is 2.
> - **R**: Reserved bit, set to "0".

In FIG. 15, when a value of a $C_0$ field 15-05 is 1, the MAC-CE may include a TCI state ID$_{0,2}$ field 15-15 in addition to a TCI state ID$_{0,1}$ field 15-10. This means that TCI state ID$_{0,1}$ and TCI state ID$_{0,2}$ are activated for a 0th codepoint of the TCI state field included within the DCI, and when the base station indicates the UE for the corresponding codepoint, the UE may be indicated with two TCI states. When the value of the $C_0$ field 15-05 is 0, the corresponding MAC-CE may not include a TCI state ID$_{0,2}$ field 15-15, and this means that one TCI state corresponding to the TCI state ID$_{0,1}$ is activated for the 0th codepoint of the TCI state field included within the DCI.

The above-described configurations may be independent for each cell or each BWP. For example, up to two activated TCI states corresponding to one TCI codepoint is configured on a PCell, while up to one activated TCI state corresponding to one TCI codepoint may be configured on a specific SCell. In this case, it may be considered that NC-JT transmission is configured on the PCell, while the NC-JT transmission is not configured on the above-described SCell.

[Method for Distinguishing Single-DCI-Based Multi-TRP PDSCH Repetition Transmission Techniques (TDM/FDM/SDM)]

Next, a method for distinguishing single-DCI-based multi-TRP PDSCH repetition transmission techniques will be described. The UE may be indicated by the base station of different single-DCI-based multi-TRP PDSCH repetition transmission techniques (e.g., TDM, FDM, SDM) depending on the value indicated by the DCI field and the higher layer signaling configuration. Table 17 below shows a method for distinguishing between single or multi-TRP-based techniques indicated to the UE depending on the value of the specific DCI field and the higher layer signaling configuration.

[Table 17]

| Combination | Numter of TCI states | Number of CDM groups | repetitionNumber configuration and indication condition | repetitionScheme configuration related | Transmission technique indiated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 2 | Condition 3 | Configured | Multi-TRP FDM scheme A/FDM scheme B/TDM scheme A |
| 9 | 2 | 2 | Condition 1 | Not configured | Multi-TRP TDM scheme B |

In Table 17 above, each column may be described as follows.

- The number of TCI states (second column): This refers to the number of TCI states indicated by the TCI state field within the DCI, which may be 1 or 2.

- The number of CDM groups (third column): This refers to the number of different CDM groups of DMRS ports indicated by an Antenna port field within the DCI. The number of different CDM groups may be 1, 2, or 3.
- repetitionNumber configuration and indication condition (fourth column): There may be three conditions depending on whether repetitionNumber is configured for all TDRA entries that may be indicated by a time domain resource allocation field within the DCI and whether the actually indicated TDRA entry has the repetitionNumber configuration.

■ Condition 1: When at least one of all the TDRA entries that may be indicated by the time domain resource allocation field includes a configuration for repetitionNumber, and the TDRA entry indicated by the time domain resource allocation field within the DCI includes a configuration for repetitionNumber greater than 1.
■ Condition 2: When at least one of all the TDRA entries that may be indicated by the time domain resource allocation field includes a configuration for repetitionNumber, and the TDRA entry indicated by the time domain resource allocation field within the DCI does not include a configuration for repetitionNumber.
■ Condition 3: When all the TDRA entries that may be indicated by the time domain resource allocation field do not include configuration for repetitionNumber.

- repetitionScheme configuration related (fifth column): This refers to whether repetitionScheme as the higher layer signaling is configured. The repetitionScheme as the higher layer signaling may be configured with one of 'tdmSchemeA', 'fdmSchemeA', and 'fdmSchemeB'.
- Transmission technique indicated to UE (sixth column): This refers to single or multi-TRP schemes indicated according to each combination (first column) expressed in Table 31 above.

■ Single-TRP: It means single TRP-based PDSCH transmission. When the UE is configured with pdsch-AggregationFactor within the PDSCH-config as the higher layer signaling, the UE may be scheduled for single TRP-based PDSCH repetition transmission as many times as configured. Otherwise, the UE may be scheduled for single TRP-based PDSCH single transmission.
■ Single-TRP TDM scheme B: This refers to single TRP-based inter-slot time resource division-based PDSCH repetition transmission. According to Condition 1 related to the repetitionNumber described above, the UE repeatedly transmits the PDSCH in time dimension as many as the number of slots corresponding to the number of times of repetitionNumber greater than 1 configured in the TDRA entry indicated by the time domain resource allocation field. In this case, for each slot as many as the number of times of repetitionNumber, a start symbol and a symbol length of the PDSCH indicated by the TDRA entry are applied equally, and the same TCI state is applied for each PDSCH repetition transmission. The corresponding technique is similar to a slot aggregation scheme in that it performs the PDSCH repetition transmission between slots on time resources, but differs from a slot aggregation scheme in that it may dynamically determine whether to indicate the repetition transmission based on the time domain resource allocation field within the DCI.
■ Multi-TRP SDM: It refers to a multi-TRP-based spatial resource division PDSCH transmission scheme. The multi-TRP SDM is a method for dividing and receiving layers from each TRP. The multi-TRP SDM is not a repetition transmission scheme, but may increase the reliability of PDSCH transmission in that it may transmit the PDSCH by increasing the number of layers and lowering a coding rate. The UE may receive the PDSCH by applying each of the two TCI states indicated through the TCI state field within the DCI to each of the two CDM groups indicated by the base station.
■ Multi-TRP FDM scheme A: It refers to a multi-TRP-based frequency resource division PDSCH transmission scheme. The multi-TRP FDM scheme A has one PDSCH transmission position (occasion). Accordingly, the multi-TRP FDM scheme A is not repetition transmission like the multi-TRP SDM, but is a technique that may transmit the PDSCH with high reliability by increasing the frequency resource amount and lowering the coding rate. The multi-TRP FDM scheme A may apply two TCI states indicated through the TCI state field within the DCI to non-overlapping frequency resources, respectively. When a PRB bundling size is determined as wideband, when the number of RBs indicated by the frequency domain resource allocation field is N, the UE receives the PDSCH by applying the first TCI state to a first ceil (N/2) RBs and applying the second TCI state to the remaining floor (N/2) RBs. Here, the ceil (.) and the floor (.) are operators indicating round up and down for the first decimal place. When the PRB bundling size is determined as 2 or 4, the PDSCH is received by applying the first TCI state to the even-numbered PRGs and applying the second TCI state to the odd-numbered PRGs.
■ Multi-TRP FDM scheme B: This refers to a multi-TRP-based frequency resource division PDSCH repetition transmission scheme. The multi-TRP FDM scheme B has two PDSCH transmission positions (occasions) and may repeatedly transmit PDSCH at each position. Similar to the multi-TRP FDM scheme A, the multi-TRP FDM scheme B may apply two TCI states indicated through the TCI state field within the DCI to non-overlapping frequency resources, respectively. When the PRB bundling size is determined as wideband, when the number of RBs indicated by the frequency domain resource allocation field is N, the UE receives the PDSCH by applying the first TCI state to a first ceil (N/2) RBs and applying the second TCI state to the remaining floor (N/2) RBs. Here, the ceil (.) and the floor (.) are operators indicating round up and down for the first decimal place. When the PRB bundling size is determined as 2 or 4, the PDSCH is received by applying the first TCI state to the even-numbered PRGs and applying the second TCI state to the odd-numbered PRGs.

■ Multi-TRP TDM scheme A: This refers to a PDSCH repetition transmission scheme within a multi-TRP-based time resource division slot. The UE has two PDSCH transmission positions (occasions) within one slot, and the first reception position may be determined based on the start symbol and symbol length of the PDSCH indicated through the time domain resource allocation field within the DCI. The start symbol of the second reception position of the PDSCH may be a position that applies a symbol offset by *StartingSymbolOffsetK* as the higher layer signaling from a last symbol of a first transmission position, and the transmission position may be determined by the symbol length indicated therefrom. When the *StartingSymbolOffsetK* as the higher layer signaling is not configured, the symbol offset may be considered as 0.

■ Multi-TRP TDM scheme B: This refers to a PDSCH repetition transmission scheme between multi-TRP-based time resource division slots. The UE has one PDSCH transmission position (occasion) within one slot, and may receive the repetition transmission based on the start symbol and symbol length of the same PDSCH for the slots corresponding to the number of times of the repetitionNumber indicated through the time domain resource allocation field within the DCI. When the repetitionNumber is 2, the UE may receive the PDSCH repetition transmission of the first and second slots by applying the first and second TCI states, respectively. When the repetitionNumber is greater than 2, the UE may use different TCI state application schemes depending on what tciMapping as the higher layer signaling is configured to. When the tciMapping is configured to cyclicMapping, the first and second TCI states are applied to the first and second PDSCH transmission positions, respectively, and the same TCI state application method is applied to the remaining PDSCH transmission positions. When the tciMapping is configured to sequentialMapping, the first TCI state is applied to the first and second PDSCH transmission positions, the second TCI state is applied to third and fourth PDSCH transmission positions, and the same TCI state application method is applied to the remaining PDSCH transmission locations.

[Joint TCI state/separate TCI State Configuration]

As an example of the present disclosure, a single TCI state indication and activation method based on a unified TCI scheme will be described. The unified TCI scheme may refer to a scheme for unifying and managing a transmission/reception beam management scheme, which is distinguished into a TCI state scheme used in the downlink reception of the UE in the existing Rel-15 and 16 and a spatial relation info scheme used in the uplink transmission, into the TCI state. Therefore, when the UE is indicated by the base station based on the unified TCI scheme, the UE may perform beam management using the TCI state for the uplink transmission as well. When the UE is configured by the base station with TCI-State as the higher layer signaling, which has tci-stateId-r17 as the higher layer signaling, the UE may perform the operation based on the unified TCI scheme using the corresponding TCI-State. The TCI-State may exist in two forms: a joint TCI state or a separate TCI state.

The first form is the joint TCI state, and the UE may be indicated by the base station of all the TCI states to be applied to the uplink transmission and the downlink reception through one TCI-State. When the UE has been indicated of the TCI-State based on the joint TCI state, the UE may be indicated of parameters to be used for downlink channel estimation using RS corresponding to qcl-Type1 in the TCI-State based on the joint TCI state, and parameters to be used as a downlink reception beam or a reception filter using RS corresponding to qcl-Type2. When the UE is indicated of the TCI-State based on the joint TCI state, the UE may be indicated of parameters to be used as an uplink transmission beam or a transmission filter by using the RS corresponding to the qcl-Type2 within the TCI-State based on the joint DL/UL TCI state. In this case, when the UE is indicated of the joint TCI state, the UE may apply the same beam to both the uplink transmission and downlink reception.

The second form is the separate TCI state, and the UE may be individually indicated by the base station of the UL TCI state to be applied to the uplink transmission and the DL TCI state to be applied to the downlink reception. When the UE is indicated of the UL TCI state, the UE may be indicated of parameters to be used as the uplink transmission beam or transmission filter using the reference RS or the source RS configured within the corresponding UL TCI state. When the UE has been indicated of the DL TCI state, the UE may be indicated of the parameters to be used for the downlink channel estimation using the RS corresponding to the qcl-Type1 configured within the corresponding DL TCI state, and the parameters to be used as the downlink reception beam or the reception filter using the RS corresponding to the qcl-Type2.

When the UE is indicated of both the DL TCI state and the UL TCI state, the UE may be indicated of the parameters to be used as the uplink transmission beam or the transmission filter by using the reference RS or the source RS configured within the corresponding UL TCI state, and indicated of the parameters to be used for the downlink channel estimation by using the RS corresponding to the qcl-Type1 configured within the corresponding DL TCI state and the parameters to be used as the downlink reception beam or the reception filter by using the RS corresponding to the qcl-Type2. In this case, when the reference RS or the source RS configured within the DL TCI state and the UL TCI state with which the UE is indicated are different, the UE may individually apply beams to the uplink transmission and downlink reception, respectively, based on the indicated UL TCI state and DL TCI state.

The UE may be configured by the base station with up to 128 joint TCI states for each specific bandwidth part in a specific cell as the higher layer signaling, and among the separate TCI states, the DL TCI state may be configured up to 64 or 128 for each specific bandwidth part within a specific cell as the higher layer signaling based on the UE capability report, and the DL TCI state among the separate TCI states and the joint TCI state may use the same higher layer signaling structure. For example, when 128 joint TCI states are configured and DL TCI states among the separate TCI states are configured to 64, 64 DL TCI states may be included in 128 joint TCI states.

Among the separate TCI states, the UL TCI state may be configured to up to 32 or 64 higher layer signalings for each specific bandwidth part within the specific cell based on the UE capability report, and like the relationship between the DL TCI state among the separate TCI states and the joint TCI state, the UL TCI state among the separate TCI states and the joint TCI state may also use the same higher layer signaling structure and the UL TCI state among the separate TCI may use different higher layer signaling structures from the DL TCI state among the separate TCI state and the joint TCI state.

In this way, the use of different or identical higher layer signaling structures may be defined in the standard, or may be distinguished through another higher layer signaling configured by the base station based on the UE capability report containing on the information on which of the two usage schemes may be supported by the UE.

The UE may receive the transmission/reception beam-related indication by the unified TCI scheme by using one of the joint TCI state and the separate TCI state configured by the base station. The UE may be configured with whether to use one of the joint TCI state and the separate TCI state by the base station through the higher layer signaling.

Hereinafter, the present disclosure describes a method for configuring/updating a unified TCI state in consideration of the situation where multi-TRP/panels are supported in a wireless communication system.

<First Embodiment: On unified TCI framework extension for S-DCI based Multiple-TRP, to map/associate a joint/DL TCI state to PDCCH reception(s)>

The base station may provide the UE with mapping-related information between the configured/indicated joint TCI state or DL TCI state and at least one CORESET or at least one CORESET group through the higher layer (e.g., RRC) signaling.

The base station may provide the UE with mapping-related information between the configured/indicated joint TCI state or DL TCI state and at least one search space or at least one search space set (or group) through the higher layer (e.g. RRC) signaling.

The base station may provide the UE with mapping-related information between the activated/indicated joint TCI state or DL TCI state and at least one CORESET or at least one CORESET group through the higher layer (e.g. MAC-CE) signaling.

The base station may provide the UE with mapping-related information between the configured/indicated joint TCI state or DL TCI state and at least one search space or at least one search space set (or group) through the higher layer (e.g. MAC-CE) signaling.

The base station may provide the UE with mapping-related information between the activated/indicated joint TCI state or DL TCI state and at least one CORESET or at least one CORESET group through the L1 (e.g. DCI) signaling.

The base station may provide the UE with mapping-related information between the configured/indicated joint TCI state or DL TCI state and at least one search space or at least one search space set (or group) through the L1 (e.g. DCI) signaling.

The base station and the UE may determine to apply the joint TCI state or the DL TCI state indicated by a fixed rule (e.g., the first or the last) to at least one CORESET or at least one CORESET group for the PDCCH reception.

The base station and the UE may determine to apply the joint TCI state or the DL TCI state indicated by the fixed rule (e.g., the first or the last) to at least one search space or at least one search space set (or group) for the PDCCH reception.

The above-described various embodiments may also be considered in operations of receiving repeatedly transmitted PDCCH, receiving single frequency network-based PDCCH, and dynamic switching between single-TRP and multiple-TRP.

Based on the signaling method (e.g., RRC) described above, the base station and the UE may apply information on single or multiple of TCI states for a specific CORESET(s).

Specifically, in the CORESET configuration within the RRC configuration/reconfiguration, the base station may provide the UE with information related to whether to support multiple (e.g., 2) TCI states.

For example, a parameter indicating whether multiple TCI states are supported may be included in the CORESET configuration (e.g., ControlResourceSet IE). The base station may configure parameters indicating whether to support multiple TCI states included in the CORESET configuration to "enabled" or "disabled". When the parameters are configured with "enabled", the corresponding CORESET may support configuring two or more TCI states.

For another example, the base station may separately configure a CORESET group in relation to the CORESET configuration. Specifically, a CORESET group ID (identifier) may be configured within the CORESET configuration (e.g., ControlResourceSet IE). The CORESET group ID may be a different parameter from CORESETPoolindex, and for the convenience of description, will be expressed as CORESETgID below. However, the term does not limit the technical scope of the present disclosure. Whether to support multiple TCI states may be configured to "enabled" or "disabled" by using the configuration of the CORESETgID within the CORESET configuration.

For example, whether to support the multiple TCI states may be configured based on the value of the CORESETgID. When the base station sets the CORESETgID to 0 in the CORESET configuration, the corresponding CORESET(s) may support a single TCI state (i.e., one TCI state may be configured for the corresponding CORESET(s)). When the base station sets a different CORESETgID (e.g., 1) in the CORESET configuration, two TCI states may be configured for the corresponding CORESET(s). The values 0 and 1 set as CORESETgID above may be substituted with each other or may be replaced with other values, and are not limited to the above example.

For another example, whether to support the multiple TCI states may be configured based on the number of CORESETgIDs. When the base station sets the CORESETgID to two values (e.g., 0 and 1) in the CORESET configuration, the corresponding CORESET(s) may support configuring multiple (e.g., 2) TCI states (i.e., multiple (e.g., 2) TCI states may be configured for the corresponding CORESET(s)). When the base station sets the CORESETgID to one value (e.g., 1 or 2) in the CORESET configuration, a single TCI state may be configured for the corresponding CORESET(s). The values 0, 1, and 2 set above may be replaced with other values and are not limited to the above example.

In the above example, the CORESETgID may also be associated with the TRP. For example, when the CORESETgID is 0, the CORESETgID may be associated with a first TRP, and when the CORESETgID is 1, the CORESETgID may be associated with a second TRP. When the CORESETgID is set to 0 and 1 for one CORESET, the corresponding CORESET may be associated with the first TRP and the second TRP. In this case, the corresponding CORESET may support configuring multiple (e.g., 2) TCI states (i.e., multiple (e.g., 2) TCI states may be configured for the corresponding CORESET).

For another example, the CORESET may be configured to be associated with the TRP by using the CORESETgID configuration within the CORESET configuration (e.g., ControlResourceSet IE). When the base station sets the CORESETgID to a specific value (e.g., 0) in the CORESET configuration, the corresponding CORESET(s) may be configured to be associated with a first TRP, and when the CORESETgID is set to another value (e.g., 1), the corresponding CORESET(s) may be configured to be associated with the second TRP. In this way, when both the first TRP and the second TRP are configured with different CORESETgIDs, the UE may determine that multiple (e.g., 2) TCI states are configured for the CORESET. In other words, when the CORESETs with different CORESETgIDs configured are configured for the UE, the UE may determine that each CORESET supports multiple TCI states. As a specific example, when a first CORESET with CORESETgID set to 0 and a second CORESET with CORESETgID set to 1 are configured for the UE, the UE may determine that two TCI states are configured for each of the first CORESET and the second CORESET. Meanwhile, when the first TRP and the second TRP are configured as the same CORESETgID, the UE may determine that one TCI state is configured for the CORESET. In other words, when the CORESETs configured for the UE have the same CORESETgID, the UE may determine that each CORESET supports one TCI state.

For another example, the base station may reinterpret and reuse the existing parameters rather than generating additional parameters.

For example, when the CORESETPoolindex value is not configured in a specific CORESET configuration, the base station and the UE may determine that the single TCI state is configured for the CORESET. For example, when the CORESETPoolindex value is set to 0 in a specific CORESET configuration, the base station and the UE may determine that two TCI states are configured for the CORESET.

The above-described examples describe a method for configuring one or multiple TCI states for a CORESET, and a method for configuring TCI state-related information for a search space or a search space set/group may also be considered.

The base station may configure one or two pieces of TCI state-related information in a search space or a search space set/group configuration associated with a specific CORESET.

For example, the base station may configure the UE to associate the search space set/group with the CORESET in the search space configuration (e.g., SearchSpaceExt-r18). As illustrated in Table 18 below, the base station may configure **followUnifiedTCIstateForsearchSpace** to "enabled" in the RRC configuration. Here, when followUnifiedTCIstateForsearchSpace is "enabled", the UE may follow the TCI state configuration of the CORESET configuration of the CORESET ID associated in the search space configuration associated with the same search space set/group ID (e.g., SSgroupID, SSlinkingID, etc.). As a specific example, when the single TCI state is configured for the CORESET configuration of the CORESET ID associated in the search space configuration associated with the same search space set/group ID (e.g., SSgroupID, SSlinkingID, etc.), the UE may determine that the single TCI state is also configured in the

**EP 4 554 307 A1**

search space (set) resource section. In addition, if the followUnifiedTCIstateForsearchSpace is "enabled", when two TCI states are configured for the CORESET configuration of the CORESET ID associated in the configured search space configuration, the UE may determine that two TCI states are also configured in the search space (set) resource section.

[Table 18]

```
SearchSpaceExt-r17(18) ::=                            SEQUENCE {

    searchSpaceId                                    SearchSpaceId,

    controlResourceSetId                             ControlResourceSetId

    ...

    },

...

    searchSpaceGroupIdList-r17(18)                   SEQUENCE (SIZE (1.. 2))

OF INTEGER(0..1)

    searchSpaceLinkingId-r17(18)                     INTEGER

(0..maxNrofSearchSpacesLinks-1-r17)


    followUnifiedTCIstateForsearchSpace-r18          ENUMERATED

{enabled}

}
```

Meanwhile, when the base station associates/links and configures a plurality of search spaces (sets/groups) in at least two or more CORESETs and supports a single TCI state or configures a single TCI state in all of the two or more CORESETs, the UE may apply a single TCI state preconfigured in the lowest CORESET ID among the CORESETs corresponding to the associated and configured search spaces (sets/groups) and/or in the lowest search space (set/group) ID resource among the associated search spaces (sets/groups).

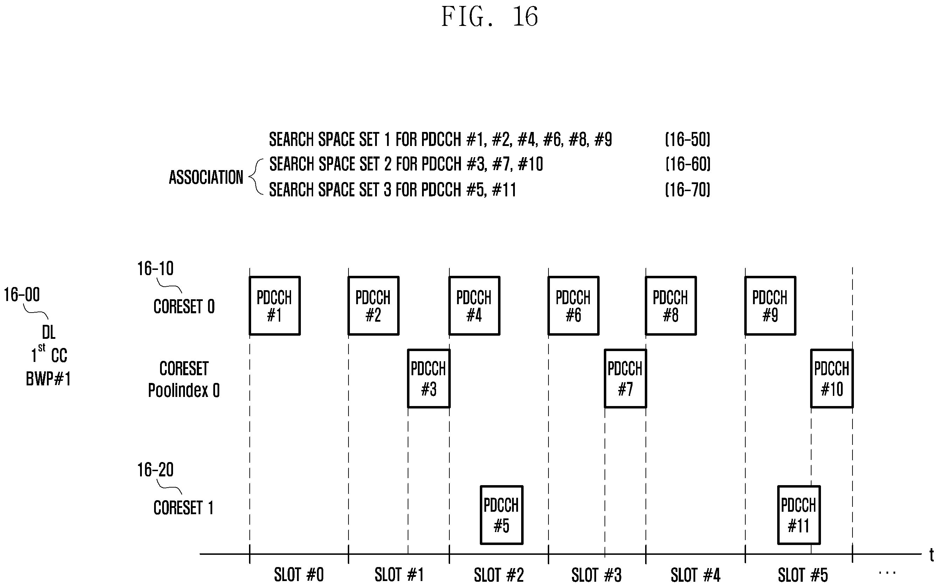

FIG. 16 is a diagram illustrating an example of applying/configuring a TCI state to a CORESET and a search space (set) according to an embodiment of the present disclosure.

FIG. 16 illustrates an example in which the base station configures CORESET 0 16-10 and CORESET 1 16-20 in BWP #1 16-00 and is configured to support the unified TCI state. In FIG. 16, it is assumed that the CORESETPoolindex is not set or the CORESETPoolindex is set to 0 for the base station to operate with single DCI-based multi-TRP. In addition, FIG. 16 illustrates PDCCH resources in order to describe from the perspective of the TCI states of the PDCCH, and the resources of the remaining channels (e.g., PDSCH, PUSCH, PUCCH) are not illustrated, but this does not mean that there is no scheduling.

For example, referring to FIG. 16, the base station may configure search space set #1 16-50 in association with CORESET 0 16-10 for transmitting PDCCHs #1, #2, #4, #6, #8, and #9 within the CORESET 0 16-10, and configure search space set #2 16-60 in association with the CORESET 0 16-10 for transmitting PDCCHs #3, #7, and #10 within the CORESET 0 16-10. In addition, the base station may configure search space set #3 16-70 in association with CORESET 1 16-20 for transmitting PDCCHs #5 and #11 within CORESET 1 16-20. Here, when the base station configures single TCI state activation (enabled) in the CORESETs 0 and 1, and configures the search space set #2 16-60 and the search space set #3 16-70 to be associated with to each other, the UE may apply the single TCI state preconfigured in i) the CORESET 0 16-10, which is the lowest CORESET ID among the CORESETs corresponding to the associated search space set, or ii) the search space set #2 16-60, which is the lowest search space set ID among the associated search space sets, to PDCCH reception.

Alternatively, when the base station configures the plurality of search spaces (sets/groups) in at least two or more CORESETs to be associated (associated/linked), and supports the single TCI state or configures the single TCI state in all of the two or more CORESETs, the UE may apply each of the single TCI states preconfigured in the associated search space (set/group) resources.

For example, referring to FIG. 16, the base station may configure search space set #1 16-50 in association with CORESET 0 16-10 for transmitting PDCCHs #1, #2, #4, #6, #8, and #9 within the CORESET 0 16-10, and configure search space set #2 16-60 in association with the CORESET 0 16-10 for transmitting PDCCHs #3, #7, and #10 within the CORESET 0 16-10. In addition, the base station may configure search space set #3 16-70 in association with CORESET 1 16-20 for transmitting PDCCHs #5 and #11 within CORESET 1 16-20. Here, when the base station configures the single TCI state activation (enabled) in the CORESET 0, 1 and configures the search space (set) #2 16-60 and the search space (set) #3 16-70 to be associated with each other, the UE may apply each of the single TCI states preconfigured in the associated search space set #2 16-60 and search space set #3 16-70. That is, the UE may detect/receive PDCCHs #3, #7, and #10 in the search space (set) #2 16-60 based on the single TCI state configured for the CORESET 0 16-10. In addition, the UE may detect/receive PDCCHs #5 and #11 in the search space set #3 16-70 based on the single TCI state configured for the CORESET 1 16-20.

Meanwhile, when the base station configures the plurality of search spaces (sets/groups) in at least two CORESETs by associating/linking the plurality of search spaces (sets/groups) and supports two TCI states or configures TCI states in all of the two or more CORESETs, the UE may determine that the second (or first) TCI state of each of the configured CORESETs is configured in the associated search space (set/group).

For example, referring to FIG. 16, the base station may configure the CORESET 0 16-10, the CORESET 1 16-20, and each CORESET may be configured to support two unified TCI states. The base station may configure search space set #1 16-50 in association with CORESET 0 16-10 for transmitting PDCCHs #1, #2, #4, #6, #8, and #9 within the CORESET 0 16-10, and configure search space set #2 16-60 in association with the CORESET 0 16-10 for transmitting PDCCHs #3, #7, and #10 within the CORESET 0 16-10. In addition, the base station may configure search space set #3 16-70 in association with CORESET 1 16-20 for transmitting PDCCHs #5 and #11 within CORESET 1 16-20. Here, when the base station configures two TCI state activations (enabled) in the CORESET 0 16-10 and the CORESET 1 16-20, and configures the search space set #2 16-60 and the search space set #3 16-70 to be associated with each other, the UE may determine that the second (or first) TCI state of each of the configured CORESET 0 16-10 and CORESET 1 16-20 is configured in the associated search space set #2 16-60 and search space set #3 16-70. That is, the UE may detect/receive PDCCHs #3, #7, and #10 in the search space (set) #2 16-60 based on the second (or first) TCI state configured for the CORESET 0 16-10. In addition, the UE may detect/receive PDCCHs #5 and #11 in the search space set #3 16-70 based on the second (or first) TCI state configured for the CORESET 1 16-20.

<Second embodiment: On unified TCI framework extension for S-DCI based Multiple-TRP, to indicate a joint/DL TCI state using DCI format to PDCCH reception(s)>

As in the first embodiment described above, the base station may configure the unified TCI state to the UE through a single DCI-based multi-TRP transmission method, and the UE may receive the PDCCH based on the TCI state configured through the higher layer configuration information. In addition, the UE may receive the TCI-related information based on the DCI format included in the PDCCH. The UE may identify beamforming information to be applied to PDCCH and PDSCH to be received and PUSCH and PUCCH to be transmitted after the UE receives the PDCCH based on the received TCI-related information of the DCI format. In other words, the UE may change/update the beam/beam information (e.g., TCI state) to be applied to the PDCCH and PDSCH reception and/or the PUSCH and PUCCH transmission after the PDCCH reception based on the received TCI-related information of the DCI format.

For example, the identified beamforming information may be the TCI field information based on DCI format 1_1 or DCI format 1_2 that has been used before rel-17. In this case, a DL assignment that schedules DL data may or may not exist. In addition, the identified beamforming information may indicate a plurality of joint/DL/UL TCI states to correspond to at least one CC and/or BWP or at least one CC and/or BWP set.

For example, the size of the TCI field within the DCI may be 3 bits. The joint DL state ID(s) and/or UL TCI state ID(s) (or unified TCI state) mapped to the codepoint value of the 3-bit TCI field can be combined in various ways according to the first embodiment described above. Here, when the number of bits of the TCI field is maintained as 3 bits, the base station may reuse the MAC-CE message described above, and may maintain the maximum number of TCI states activated by the MAC-CE message as 8 codepoints.

In the following description, the interpretation of the DCI information is first described under the assumption that the size of the TCI field is 3 bits.

The base station may indicate one of the TCI-related information configured using the above-described RRC and/or MAC CE to the UE through the TCI field of the PDCCH of a specific CORESET (e.g., first CORESET). The RRC and/or MAC CE information may configure two TCI states or a single TCI state. The UE may identify and apply the transmission/reception beam based on the TCI-related information (e.g., TCI state) corresponding to the codepoint of the indicated TCI field.

When there are multiple (e.g., 2) of TCI states corresponding to the codepoint value of the TCI field within the DCI, a method for applying the indicated TCI states to the PDCCH/PDSCH/PUCCH/PUSCH after receiving the PDCCH indicating the TCI states is required. The following description focuses on an example of application to the PDCCH, but the scope of the present disclosure is not limited thereto, and the present disclosure may of course be applied to the PDSCH/PUCCH/PUSCH.

When there are multiple (e.g., 2) TCI states corresponding to the codepoint value of the TCI field within the DCI, a method for using all the indicated TCI states may be considered.

For example, when the number of TCI states mapped to the codepoint of the TCI field indicated by the base station in the PDCCH of the specific CORESET is two, the UE may apply the first TCI state for the reception of the PDCCH scheduled in the specific CORESET in which the PDCCH is received, and apply the second TCI state for the reception of the PDCCH scheduled in another CORESET. For example, when the PDCCH is received in the first CORESET, the UE may detect/receive the PDCCHs scheduled in the first CORESET after receiving the PDCCH using the first TCI state, and detect/receive the PDCCHs scheduled in another CORESET (e.g., the second CORESET) using the second TCI state.

For another example, when the number of TCI states mapped to the codepoint of the TCI field within the DCI is two, the TCI state may be applied according to the CORESET ID value configured in the higher layer. For example, the CORESET 0 may apply the first TCI state indicated by the codepoint value of the TCI field within the DCI, and the CORESET 1 may apply the second TCI state indicated by the codepoint value of the TCI field within the DCI.

For another example, for changing the PDCCH transmission/reception beam, the CORESET having the same CORESET ID as the CORESET ID of the CORESET with indicated PDCCH beam change may apply the first TCI state indicated by the codepoint value, and the remaining CORESET(s) may apply the second TCI state.

For another example, the TCI state may be applied according to the CORESET group configured and activated in the higher layer (RRC/MAC CE). For example, the CORESET group may be configured by the CORESET group ID (CORESETgID) in the CORESET configuration (e.g., ControlResourceSet IE) as described above in the first embodiment.

For example, the first CORESET group (e.g., CORESETgID=0) configured and activated in the higher layer (RRC/MAC CE) may apply the first TCI state indicated by the codepoint value of the DCI field, and the activated second CORESET group (e.g., CORESETgID=1) may apply the second TCI state indicated by the codepoint value of the DCI field. That is, the UE may apply the first TCI state to the PDCCH received based on the CORESET included in the first CORESET group, and may apply the second TCI state to the PDCCH received based on the CORESET included in the second CORESET group.

For example, the CORESET group including the CORESET associated with the PDCCH indicating the TCI state(s) may apply the first TCI state indicated by the codepoint value of the DCI field, and the other CORESET groups may apply the second TCI state indicated by the codepoint value of the DCI field. When the CORESET associated with the PDCCH indicating the TCI state(s) is included in the second CORESET group (e.g., CORESETgID=1), the UE may apply the first TCI state to the received PDCCH based on the CORESET included in the second CORESET group, and may apply the second TCI state to the received PDCCH based on the CORESET included in the first CORESET group (e.g., CORESETgID=0).

Alternatively, when the number of TCI states mapped to the codepoint of the TCI field indicated in the PDCCH of the specific CORESET is multiple (e.g., 2), a method for using only the single TCI state among the indicated TCI states may be considered. The UE may apply only the single TCI state for the reception of the PDCCH scheduled in the specific CORESET. The single TCI state may be fixed as the first TCI state, or may be explicitly specified in the RRC configuration to apply the first or second TCI state.

For example, when the base station activates only one CORESET to the UE and deactivates the remaining CORESET(s), the UE may apply the first TCI state indicated by the codepoint value to the activated CORESET when the CORESET ID of the activated CORESET is the same as the CORESET (ID) for which the PDCCH is scheduled for the PDCCH beam change.

For another example, when the CORESET supports only the single TCI configuration according to the CORESET configuration by the higher layer (e.g., RRC/MAC CE) signaling, the UE may apply the first TCI state indicated by the codepoint value of the DCI field to the corresponding CORESET (e.g., CORESET 0).

For another example, when all the CORESETs are configured or activated to the same CORESET group according to the CORESET group configured and activated in the higher layer (RRC/MAC CE), the UE may apply the first TCI state indicated by the codepoint value of the DCI field to the CORESET of the corresponding CORESET group. For example, the CORESET group may be configured by the CORESET group ID (CORESETgID) in the CORESET configuration (e.g., ControlResourceSet IE) as described above in the first embodiment.

The description of various embodiments described above illustrates an embodiment in which the first TCI state is applied, but the second TCI state may be applied so as not to violate the principle of applying one TCI state.

Alternatively, when the number of TCI states mapped to the codepoint of the TCI field indicated by the base station in the PDCCH of the specific CORESET is one, the UE may apply the single TCI state for the reception of the PDCCH scheduled in the specific CORESET.

Meanwhile, although the above-described proposed method and/or embodiment assumes that the TCI field of the DCI is 3 bits, the DCI TCI field may be composed of 3 bits or more in size (e.g., 4 bits). In this case, the joint DL state ID(s) and/or UL TCI state ID(s) (or unified TCI state) mapped to the codepoint values of the TCI field may have additional combinations corresponding to the first embodiment described above. In addition, in this case, the base station may not support the DCI format 1_1 used before the rel-17, and may support only the DCI format 1_2, or may support a new DCI format. In addition, the base station may add some octects to the MAC-CE message described above to expand the maximum number of TCI states activated by the MAC-CE message to 16 or more codepoints.

When the DCI TCI field is configured to have a size of 3 bits or more (e.g., 4 bits), the TCI field may include additional information in addition to the TCI state information. In the following embodiments, the case where the DCI field is 4 bits is described as an example, but the scope of the present disclosure is not limited thereto, and it is obvious that the TCI field may be composed of a larger number of bits.

For example, when the conventional TCI field is added with 1 bit to be composed of 4 bits, the base station may indicate the CORESETgID by the most significant/least significant 1 bit information, and may indicate the unified TCI state information by the remaining 3 bits. When the most significant/least significant 1 bit value of the TCI field indicated by the base station is 0, the CORESETgID is 0, and the UE may identify the TCI state corresponding to the codepoint value of the remaining 3 bits. When the most significant/least significant 1 bit value of the TCI field indicated by the base station is 1, the CORESETgID is 1, and the UE may identify the TCI state corresponding to the codepoint value of the remaining 3 bits.

For another example, when the conventional TCI field is added with 1 bit to be composed of 4 bits, the base station may indicate a channel applying the TCI state by the most significant/least significant 1 bit information, and may indicate the unified TCI state information by the remaining 3 bits. When the most significant/least significant 1 bit value of the TCI field indicated by the base station is 0, this indicates one (e.g., PDCCH) of PDCCH and PDSCH or one (e.g., PUCCH) of the PUCCH and PUSCH, and the UE may identify the TCI state corresponding to the codepoint value of the remaining 3 bits. When the most significant/least significant 1 bit value of the TCI field indicated by the base station is 1, this indicates one (e.g., PDSCH) of PDCCH and PDSCH or one (e.g., PUSCH) of the PUCCH and PUSCH, and the UE may identify the TCI state corresponding to the codepoint value of the remaining 3 bits.

For another example, when the conventional TCI field is added with 1 bit to be composed of 4 bits, the base station may indicate the channel unit applying the TCI state by the most significant/least significant 1 bit information, and may indicate the unified TCI state information by the remaining 3 bits. When the most significant/least significant 1 bit value of the TCI field indicated by the base station is 0, this means that the TCI state application is indicated for both the PDCCH and PDSCH, and the UE may identify the TCI state corresponding to the codepoint value of the remaining 3 bits. When the most significant/least significant 1 bit value of the TCI field indicated by the base station is 1, it means that the application of the TCI state is indicated to one (e.g., PDSCH) of the PDCCH, PDSCH or one (e.g., PUSCH) of the PUCCH, PUSCH, and the UE may identify the TCI state corresponding to the codepoint value of the remaining 3 bits.

<Third Embodiment: On unified TCI framework extension for S-DCI based Multiple-TRP, how/when to apply to a TCI indication for UE-specific PDCCH>

A method for applying a unified TCI state indicated by the TCI field of the PDCCH scheduled in the CORESET having the same CORESET group ID in the single DCI-based M-TRP will be described.

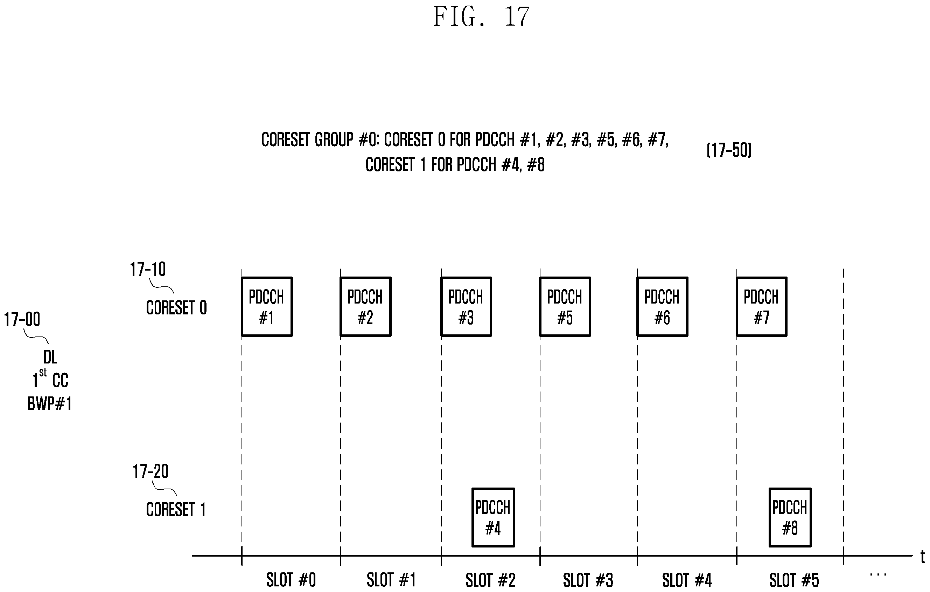

FIG. 17 illustrates an example of applying/configuring the TCI state to a PDCCH when a CORESET group is configured according to an embodiment of the present disclosure.

FIG. 17 illustrates an example in which the base station configures CORESET 0 17-10 and CORESET 1 17-20 in BWP #1 17-00 and is configured to support two unified TCI states. In FIG. 17, it is assumed that the CORESETPoolindex is not set or the CORESETPoolindex is set to 0 for the base station to operate with single DCI-based multi-TRP. In addition, FIG. 17 illustrates PDCCH resources in order to describe from the perspective of the TCI states of the PDCCH, and the resources of the remaining channels (e.g., PDSCH, PUSCH, PUCCH) are not illustrated, but this does not mean that there is no scheduling.

The base station and the UE may assume that the TCI field information of the PDCCH scheduled in the same CORESET group in the same slot is based on the same TCI state. The same CORESET group may mean a set of one or more CORESET(s) with the same CORESETgID.

For example, referring to FIG. 17, the base station may indicate the same TCI information by PDCCH #3 and PDCCH #4 scheduled at slot #2 time in CORESET 0 17-10 and CORESET 1 17-20 composed of CORESET group #0 17-50. Here, the same TCI information may mean that the codepoint of the TCI field has the same value.

For another example, the base station may indicate the same spatial QCL information associated with the TCI state indicated by the codepoint even if the codepoint values of the TCI field indicated by PDCCH #3 and PDCCH #4 scheduled at slot #2 time in the CORESET 0 17-10 and the CORESET 1 17-20 composed of CORESET group #0 17-50 are different.

That is, the UE may not expect to perform different beamforming within the same CORESET group.

When the base station schedules each PDCCH of the CORESET(s) of the same CORESET group ID at different slot times, the base station may indicate the same TCI state information in common to the PDCCHs scheduled before the beam application time for PDCCH. That is, the UE may assume that the same TCI state-related information is indicated in the TCI fields of the PDCCHs received before the beam application time for PDCCH even if each PDCCH of the CORESET(s) of the same CORESET group ID is scheduled at different slot times.

For example, referring to FIG. 17, the base station may indicate the same TCI state-related information from PDCCH #2 scheduled at slot #1 time to the beam application time (e.g., assuming PDCCH #8) of the PDCCH #2 through the PDCCH #4 scheduled at slot #2 time in the CORESET 0 17-10 and the CORESET 1 17-20 composed of the CORESET group #0 17-50. The UE may receive the PDCCH #2 scheduled at slot #1 time in the CORESET 0 17-10 and the CORESET 1 17-20 composed of the CORESET group #0 17-50 to identify the information of the TCI field, and transmit an acknowledgement (ACK) message corresponding to the PDCCH #2 to the base station using the PUCCH (not illustrated) at slot #2 time. Thereafter, the UE may calculate the beam application time (e.g., 2 slots) based on the PUCCH transmission time, and may assume that the PDCCH(s) (e.g., PDCCHs #3, #4, and #5) indicated before PDCCH #6 of slot #4 indicates the same TCI state-related information as the PDCCH #2. As a result, the base station and the UE may perform the transmission/reception beamforming based on the information indicated by the finally unified TCI state after the beam application time (e.g., slot #4).

Next, a method for applying a unified TCI state indicated by the TCI field of the PDCCH scheduled in the CORESET having different CORESET group IDs in the single DCI-based M-TRP will be described.

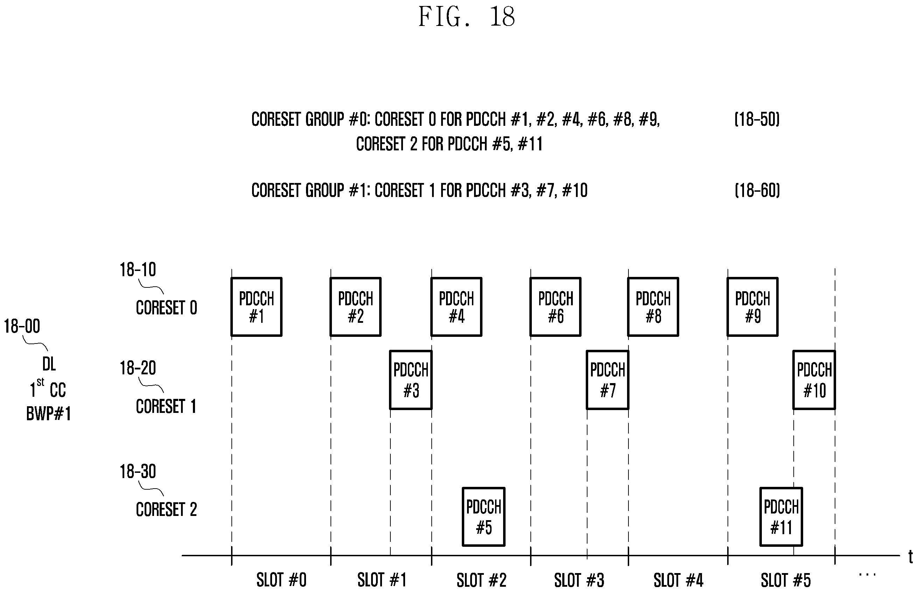

FIG. 18 illustrates an example for explaining a method for applying a TCI state to a PDCCH received in CORESETs in which different CORESET group IDs are configured according to an embodiment of the present disclosure.

For example, the base station and the UE may assume that the TCI field information within the DCI scheduled in the CORESET having different CORESET group IDs configured within the same slot is the same.

As a specific example, referring to FIG. 18, the base station may schedule a PDCCH transmission in CORESET 0 18-10 and CORESET 2 18-30 composed of CORESET group #0 18-50 and CORESET 1 18-20 composed of CORESET group #1 18-60. In this case, the PDCCH #2 and the PDCCH #3 scheduled at slot #1 time may indicate the same TCI state(s) information. Here, the same TCI state(s) information may mean that the codepoint of the TCI field is the same or the codepoint of the TCI field is different, but the TCI state(s) indicated by the codepoint is the same. When the base station performs the PDCCH repetition transmission, it may configure the same DCI and/or TCI information as described above.

Alternatively, for example, the base station and the UE may assume that the TCI field information within the DCI scheduled in the CORESET having different CORESET group IDs configured within the same slot is different.

As a specific example, referring to FIG. 18, the TCI information indicated by the PDCCH #6 and the PDCCH #7 scheduled at slot #3 time in the CORESET 0 18-10 and the CORESET 2 18-30 composed of the CORESET group #0 18-50 and the CORESET 1 18-20 composed of the CORESET group #1 18-60 may schedule different TCI state(s) information. Here, different TCI state(s) information may mean that the codepoint value of the TCI field is the same, but two TCI states corresponding to the codepoint are different, or that the codepoint values of the TCI field are different.

For example, when the base station schedules the PDCCH at a different slot time in the CORESET(s) with different CORESET group IDs configured, different TCI state-related information may be indicated in the TCI field of the PDCCH scheduled before the beam application time for PDCCH. That is, the UE may assume that different TCI state-related information is indicated for the PDCCHs scheduled at different slot time in the CORESET(s) with different CORESET group IDs configured before the beam application time for PDCCH. Alternatively, the UE may assume that the TCI field information of each PDCCH scheduled at different slot time in the CORESET(s) with different CORESET group IDs configured is independently indicated.

For example, referring to FIG. 18, the base station may indicate the TCI state based on the TCI field information of the PDCCH #2 scheduled at slot #1 time in the CORESET 0 18-10 and the CORESET 2 18-30 composed of the CORESET group #0 18-50, and may indicate the TCI state based on the TCI field information of the PDCCH #3 scheduled at slot #1 time in the CORESET 1 18-20 composed of the CORESET group #1 18-60. Here, when the codepoint value indicated by each TCI field includes two TCI states, the UE may apply one of the two TCI states corresponding to the CORESET 0 18-10 composed of the CORESET group #0 18-50, the other of the two TCI states corresponding to the CORESET 2 18-30, and one of the two TCI states corresponding to the CORESET 1 18-20. Here, the timing at which the unified TCI state is applied for the PDCCH beam change may be calculated based on the beam application time of the first (or last) CORESET ID (e.g., CORESET 0 corresponding to CORESET group #0 and CORESET 1 corresponding to CORESET group #1) composed of each CORESET group or the first (or last) PDCCH reception (e.g., PDCCH #2 corresponding to CORESET group #0, and #3 corresponding to CORESET group #1) of the CORESET ID that indicates the PDCCH beam change.

When the codepoint value indicated by the TCI field described above includes the single TCI state, the UE may apply one TCI state corresponding to the CORESET 0 18-10 composed of the CORESET group #0 18-50, the same TCI state corresponding to the CORESET 2 18-30, and one TCI state corresponding to the CORESET 1 18-20. Here, the timing at which the unified TCI state is applied for the PDCCH beam change may be calculated based on the beam application time of the first (or last) CORESET ID (e.g., CORESET 0 corresponding to CORESET group #0 and CORESET 1 corresponding to CORESET group #1) composed of each CORESET group or the first (or last) PDCCH reception (e.g., PDCCH #2 corresponding to CORESET group #0, and #3 corresponding to CORESET group #1) of the CORESET ID that indicates the PDCCH beam change.

In addition, the specific TCI state application combination may be extended by combining with the first and second embodiments described above.

The embodiments and/or methods (e.g., the first embodiment, the second embodiment, the third embodiment, etc.) proposed in the present disclosure may be performed in combination with each other. In addition, the operation of one embodiment may be performed as a part of another embodiment or may be performed by being replaced with some methods of another embodiment.

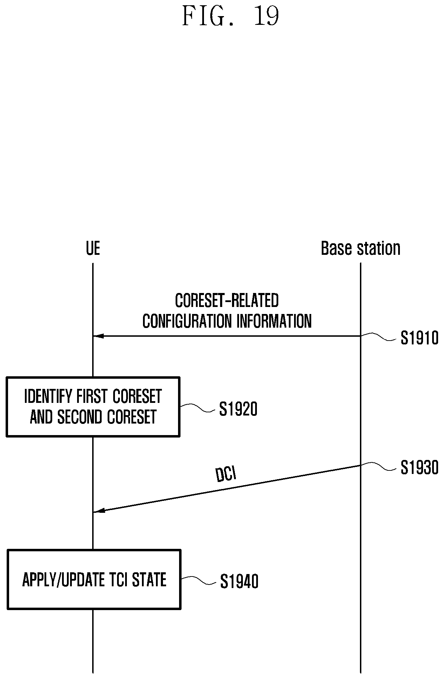

FIG. 19 illustrates an example of a signaling sequence diagram of the UE and the base station according to an embodiment of the present disclosure. FIG. 19 may be performed based on the embodiments and/or methods (e.g., the first embodiment, the second embodiment, the third embodiment, etc.) described above. Therefore, when each step of FIG. 19 is performed, the embodiments and/or methods (e.g., the first embodiment, the second embodiment, the third embodiment, etc.) described above may be referred to. FIG. 19 is only an example to help understanding of the present disclosure, and does not limit the scope of the present disclosure. The operation order of FIG. 19 may be changed. In addition, some steps in FIG. 19 may be merged and performed as one step, or some steps may be omitted and performed in some cases.

The UE may receive CORESET-related configuration information (e.g., ControlResourceSet IE) (S1910). That is, the base station may transmit the CORESET-related configuration information to the UE. The configuration information may be transmitted through the higher layer signaling (e.g., RRC).

For example, the configuration information may include a CORESET group identifier corresponding to each CORESET. In addition, the configuration information may include an index of a CORESET pool.

The base station may configure one or more CORESETs to the UE based on the configuration information. For example, a first CORESET and a second CORESET may be configured, and a CORESET group identifier may be configured corresponding to each CORESET.

The UE may identify the first CORESET associated with the first CORESET group and the second CORESET associated with the second CORESET group, based on the CORESET group identifier (S 1920). For example, the first CORESET group may correspond to the first TRP, and the second CORESET group may correspond to the second TRP.

For example, different CORESET group identifiers may be configured for each of the first CORESET and the second CORESET, and in this case, multiple TCI states may be configured for each of the first CORESET and the second CORESET through the higher layer signaling. The same CORESET group identifier may be configured for each of the first CORESET and the second CORESET, and in this case, one TCI state may be configured for each of the first CORESET and the second CORESET through the higher layer signaling.

Alternatively, for example, one or more CORESET group identifiers may be configured corresponding to each CORESET, and the number of TCI states supported by each CORESET may be identified based on the number of CORESET group identifiers. For example, the CORESET in which the plurality of CORESET group identifiers are configured may support the multiple TCI states.

The UE may receive the DCI (S 1930). That is, the base station may transmit the DCI to the UE.

The DCI may include the TCI field. The code point of the TCI field may correspond to one or multiple (e.g., 2) TCI states among the TCI states configured by the higher layer signaling (e.g., RRC, MAC-CE). For example, the TCI state indicated by the TCI field may be the unified TCI state for the uplink channel and the downlink channel. For example, the TCI field may further include information on the CORESET group identifiers or information on a physical channel to which a TCI state indicated by the TCI field is applied.

The DCI may be transmitted through the PDCCH. For example, the PDCCH including the DCI may be received based on one of the first CORESET or the second CORESET.

The UE may apply the TCI state indicated by the TCI field to the physical channel/signal to be received after receiving the PDCCH including the DCI (S1940).For example, when the code point of the TCI field corresponds to multiple TCI states, the first TCI state among multiple TCI states may be applied to a channel associated with the first CORESET, and the second TCI state may be applied to a channel associated with the second CORESET. For example, when the code point of the TCI field corresponds to multiple TCI states, the UE may apply the first TCI state among multiple TCI states to a PDCCH received in the first CORESET, and apply the second TCI state to the PDCCH received in the second CORESET. For another example, when the code point of the TCI field corresponds to multiple TCI states, the UE may apply the first TCI state among multiple TCI states to the uplink channel (e.g., PUCCH, PUSCH) scheduled by the PDCCH received in the first CORESET, and the second TCI state to the uplink channel (e.g., PUCCH, PUSCH) scheduled by the PDCCH received in the second CORESET.

Although not illustrated in FIG. 19, the UE may also receive the configuration information on the search space. That is, the base station may transmit the configuration information on the search space to the UE. The configuration information may be transmitted through the higher layer signaling (e.g., RRC).

For example, the CORESET associated with the search space may be identified based on the configuration information for the search space. In addition, the UE may determine the TCI state to be applied to the search space based on the configuration information. For example, the UE may apply the TCI state configured for the CORESET associated with the search space to the search space.

For example, the UE may identify the first search space set associated with the first CORESET and the second search space set associated with the second CORESET based on the configuration information for the search space. In addition, the UE may identify that the first search space set and the second search space set are associated. The UE may detect the PDCCH based on the TCI state configured for the CORESET corresponding to the search space set having the lower search space set identifier of the first search space set and the second search space set which are associated. Alternatively, the UE may detect the PDCCH based on the TCI state configured for the CORESET having the lowest CORESET ID among the CORESETs corresponding to the associated search space sets.

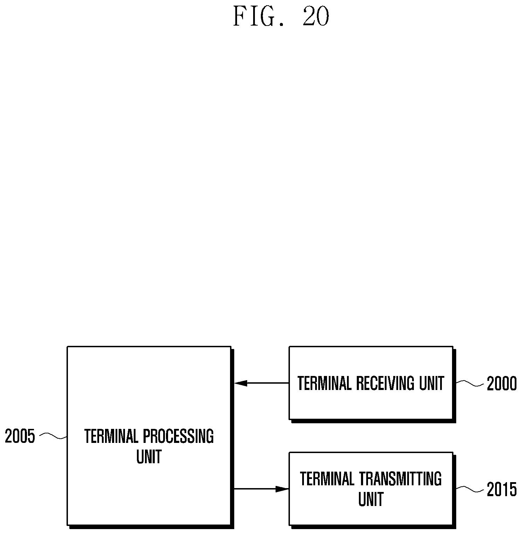

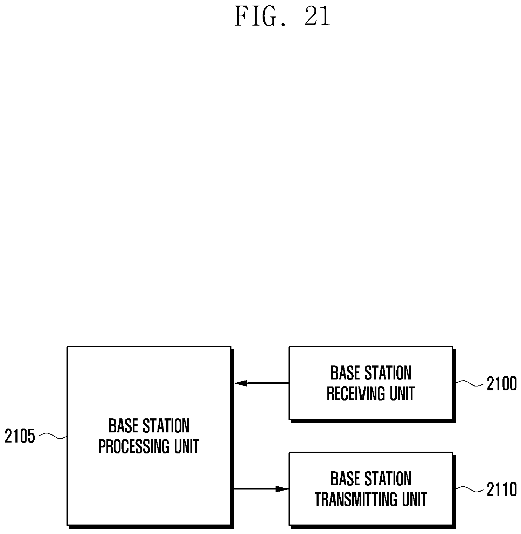

The embodiments and/or methods (e.g., the first embodiment, the second embodiment, the third embodiment, etc.) described in the present disclosure and the operations of FIG. 19 may be performed by the UE and the base station of FIGS. 20 and 21.

FIG. 20 is a diagram illustrating a structure of the UE in the wireless communication system according to an embodiment of the present disclosure.

Referring to FIG. 20, the UE may include a transceiver that refers to a terminal receiving unit 2000 and a terminal transmitting unit 2010, a memory (not illustrated), and a terminal processing unit 2005 (or a terminal control unit or processor). According to the above-described UE communication method, the transceivers 2000 and 2010, the memory, and the terminal processing unit 2005 of the UE may operate. However, the components of the UE are not limited to the above-described examples. For example, the UE may include more or fewer components than the above-described components. In addition, the transceiver, the memory, and the processor may be implemented in the form of a single chip.

The transceiver may transmit and receive a signal to and from the base station. Here, the signal may include control information and data. To this end, the transceiver may include an RF transmitter that up-converts and amplifies a frequency of a transmitted signal, and an RF receiver that low-noise amplifies a received signal and down-converts a frequency of the received signal. However, this is only an embodiment of the transceiver, and the components of the transceiver are not limited to the RF transmitter and the RF receiver.

In addition, the transceiver may receive a signal through a wireless channel and output the received signal to the processor, and transmit the signal output from the processor through the wireless channel.

The memory may store a program and data necessary for the operation of the UE. In addition, the memory may store control information or data included in the signal transmitted and received by the UE. The memory may include a storage medium such as a ROM, a RAM, a hard disk, a CD-ROM, and a DVD, or a combination of storage medium. In addition, there may be a plurality of memories.

In addition, the processor may control a series of processes so that the UE may operate according to the above-described embodiment. For example, the processor may control a component of the UE to receive the CORESET-related configuration information, identify the first CORESET associated with the first CORESET group and the second CORESET associated with the second CORESET group, receive the DCI, and, when the codepoint of the TCI field included in the DCI corresponds to multiple TCI states, apply the first TCI state among the multiple TCI states to the channel associated with the first CORESET and apply the second TCI state to the channel associated with the second CORESET. There may be a plurality of processors, and the processor may perform a control operation of the components of the UE by executing the program stored in the memory.

FIG. 21 is a diagram illustrating a structure of the base station in the wireless communication system according to an embodiment of the present disclosure.

Referring to FIG. 21, the base station may include a transceiver that refers to a base station receiving unit 2100 and a base station transmitting unit 2110, a memory (not illustrated), and a base station processing unit 2105 (or a base station control unit or a processor). According to the above-described base station communication method, the transceivers 2100 and 2110, the memory, and the base station processing unit 2105 of the base station may operate. However, the components of the base station are not limited to the above-described examples. For example, the base station may include more or fewer components than the above-described components. In addition, the transceiver, the memory, and the processor may be implemented in the form of a single chip.

The transceiver may transmit and receive a signal to and from the UE. Here, the signal may include control information and data. To this end, the transceiver may be composed of an RF transmitter that up-converts and amplifies a frequency of a transmitted signal, and an RF receiver that low-noise amplifies a received signal and down-converts a frequency of the received signal. However, this is only an embodiment of the transceiver, and the components of the transceiver are not limited to the RF transmitter and the RF receiver.

In addition, the transceiver may receive a signal through a wireless channel and output the received signal to the processor, and transmit the signal output from the processor through the wireless channel.

The memory may store a program and data necessary for the operation of the base station. In addition, the memory may store control information or data included in the signal transmitted and received by the base station. The memory may include a storage medium such as a ROM, a RAM, a hard disk, a CD-ROM, and a DVD, or a combination of storage medium. In addition, there may be a plurality of memories.

The processor may control a series of processes so that the base station may operate according to the above-described embodiment of the present disclosure. For example, the processor may control each component of the base station to transmit the CORESET-related configuration information and transmit the DCI including the TCI field to the UE. In this case, the CORESET-related configuration information includes a CORESET group identifier corresponding to each CORESET, and when the code point of the TCI field included in the DCI corresponds to multiple TCI states, the first TCI state among the multiple TCI states may be applied to the channel associated with the first CORESET, and the second TCI state may be applied to the channel associated with the second CORESET. There may be a plurality of processors, and the processor may perform a component control operation of the base station by executing the program stored in the memory.

The methods according to embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings have been presented to easily explain the technical contents of the disclosure and help understanding of the disclosure, and are not intended to limit the scope of the disclosure. That is, it will be apparent to those skilled in the art that other modifications and changes may be made thereto on the basis of the technical idea of the disclosure. Further, the above respective embodiments may be employed in combination, as necessary. For example, one embodiment of the disclosure may be partially combined with other embodiments to operate a base station and a terminal. As an example, embodiment 1 and 2 of the disclosure may be combined with each other to operate a base station and a terminal. Further, although the above embodiments have been described on the basis of the FDD LTE system, other variants based on the technical idea of the embodiments may also be implemented in other communication systems such as TDD LTE, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

Further, in methods of the disclosure, some or all of the contents of each embodiment may be combined without departing from the essential spirit and scope of the disclosure.

Various embodiments of the disclosure have been described above. The above description of the disclosure has been given by way of example, and embodiments of the disclosure are not limited to the embodiments disclosed herein. Those skilled in the art will appreciate that the disclosure may be easily modified into other specific forms without departing from the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1.   A method performed by a terminal in a wireless communication system, the method comprising:

   receiving configuration information related to a control resource set (CORESET), the configuration information including CORESET group identifiers corresponding to each CORESET;
   identifying a first CORESET associated with a first CORESET group and a second CORESET associated with a second CORESET group, based on the CORESET group identifiers;
   receiving downlink control information (DCI) including a transmission configuration indicator (TCI) field based on one of the first CORESET and the second CORESET; and
   in case that a codepoint of the TCI field corresponds to multiple TCI states, applying a first TCI state to a channel associated with the first CORESET and applying a second TCI state to a channel associated with the second CORESET, among the multiple TCI states.

2.   The method for claim 1, wherein the TCI field further includes information on the CORESET group identifiers or information on a physical channel to which a TCI state indicated by the TCI field is applied.

3.   The method for claim 1, wherein multiple TCI states are configured for each of the first CORESET and the second CORESET through higher layer signaling, based on that different CORESET group identifiers are configured for each of the first CORESET and the second CORESET.

4.   The method for claim 1, further comprising:

   receiving configuration information on a search space;
   identifying a CORESET associated with the search space based on the configuration information on the search space; and
   applying a TCI state configured for the CORESET associated with the search space to the search space.

5.   The method for claim 1, further comprising:

   identifying a first search space set associated with the first CORESET and a second search space set associated with the second CORESET;
   identifying that the first search space set and the second search space set are associated; and
   detecting a physical downlink control channel (PDCCH) in the first search space set and the second search space set,
   wherein the PDCCH is detected based on a TCI state configured for a CORESET corresponding to a search space set having a lower search space set identifier of the first search space set and the second search space set which are associated.

6.   The method for claim 1, wherein a number of TCI states supported by each CORESET is identified based on a number of CORESET group identifiers corresponding to each CORESET, and
   wherein a CORESET in which a plurality of CORESET group identifiers are configured supports multiple TCI states.

7.   The method for claim 1, wherein the configuration information further includes an index of a CORESET pool, and
   wherein a TCI state indicated by the TCI field is a unified TCI state for an uplink channel and a downlink channel.

8.   The method for claim 1, wherein the first CORESET group corresponds to a first transmission and reception point (TRP), and the second CORESET group corresponds to a second TRP.

9. A method performed by a base station in a wireless communication system, the method comprising:

transmitting configuration information related to a control resource set (CORESET) to a terminal, the configuration information including CORESET group identifiers corresponding to each CORESET, and a first CORESET group being associated with a first CORESET and a second CORESET group being associated with a second CORESET, based on the CORESET group identifiers; and

transmitting downlink control information (DCI) including a transmission configuration indicator (TCI) field to the terminal based on one of the first CORESET and the second CORESET,

wherein, in case that a codepoint of the TCI field are configured to correspond to multiple TCI states, a first TCI state is applied to a channel associated with the first CORESET, and a second TCI state is applied to a channel associated with the second CORESET, among the multiple TCI states.

10. The method for claim 9, wherein the TCI field further includes information on the CORESET group identifiers or information on a physical channel to which a TCI state indicated by the TCI field is applied.

11. The method for claim 9, wherein multiple TCI states are configured for each of the first CORESET and the second CORESET through higher layer signaling, based on that different CORESET group identifiers are configured for each of the first CORESET and the second CORESET, and

wherein the first CORESET group corresponds to a first transmission and reception point (TRP), and the second CORESET group corresponds to a second TRP.

12. The method for claim 9, further comprising:

transmitting configuration information on a search space to the terminal,

wherein a CORESET associated with the search space is indicated based on the configuration information on the search space, and

wherein a TCI state configured for the CORESET associated with the search space is applied to the search space.

13. The method for claim 9, wherein a number of TCI states supported by each CORESET is identified based on a number of CORESET group identifiers corresponding to each CORESET,

wherein a CORESET in which a plurality of CORESET group identifiers are configured supports multiple TCI states, and

wherein the TCI state indicated by the TCI field is a unified TCI state for an uplink channel and a downlink channel.

14. A terminal of a wireless communication system, comprising:

a transceiver that transmits and receives a signal; and

a control unit that is functionally connected to the transceiver,

wherein the control unit is configured to receive configuration information related to a control resource set (CORESET), the configuration information including CORESET group identifiers corresponding to each CORESET,

identify a first CORESET associated with a first COFRESET group and a second CORESET associated with a second CORESET group, based on the CORESET group identifiers,

receive downlink control information (DCI) including a transmission configuration indicator (TCI) field based on one of the first CORESET and the second CORESET, and

in case that a codepoint of the TCI field correspond to multiple TCI states, apply a first TCI state to a channel associated with the first CORESET, and apply a second TCI state to a channel associated with the second CORESET, among the multiple TCI states.

15. A base station of a wireless communication system, comprising:

a transceiver that transmits and receives a signal; and

a control unit that is functionally connected to the transceiver,

wherein the control unit is configured to transmit configuration information related to a control resource set (CORESET) to a terminal, the configuration information including CORESET group identifiers corresponding to each CORESET, and a first CORESET group being associated with a first CORESET and a second CORESET group being associated with a second CORESET, based on the CORESET group identifiers, and

transmit downlink control information (DCI) including a transmission configuration indicator (TCI) field to the terminal based on one of the first CORESET and the second CORESET, and

in case that a codepoint of the TCI field are configured to correspond to multiple TCI states, a first TCI state is applied to a channel associated with the first CORESET and a second TCI state is applied to a channel associated with the second CORESET, among the multiple TCI states.

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

Time

$\bar{l}=0$

$\bar{l}=14 \cdot 2^{\mu} - 1$

$K=0$

FIG. 2

EP 4 554 307 A1

FIG. 3

BWP#1
(301)

BWP#2
(302)

Frequency

UE bandwidth (300)

FIG. 4

Duration (404)

Frequency resources (403)

UE bandwidth part (410)

Slot (420)

Control resource set#1 (401)

Control resource set#2 (402)

Time

Frequency

# FIG. 5

# FIG. 6

1 slot = 14 OFDM symbols

| 0 | 1 | 2 | 3 | 4 | 5 | 6 | 7 | 8 | 9 | 10 | 11 | 12 | 13 |

▨ Search space 1
▦ Search space 2
▨ Search space 3

(5-1-00)
[X,Y] = (7,3)

X=7
Y=3
Y=3

(5-1-05)
[X,Y] = (4,3)

X=4
X'=5>X
X'=5>X
Y=3
Y=3
Y=3

(5-1-10)
[X,Y] = (2,2)

X=2    X=2    X=2    X=2    X=2    X=2    X=2
Y=2    Y=2    Y=2    Y=2    Y=2    Y=2    Y=2

EP 4 554 307 A1

## FIG. 7

TCI state #0
(700)

TCI state #1
(705)

TCI state #2
(710)

# FIG. 8

RRC configured TCI states (800)

| TCI #0 (805) | TCI #1 (810) | TCI #2 (815) | . . . | TCI #N (820) |

A list of TCI states for a CORESET (825)

| TCI #a (830) | TCI #b (835) | . . . | TCI #n (840) |

TCI indication via MAC CE
(845)

FIG. 9

| Serving Cell ID (915) | | CORESET ID (920) | OCt 1 (900) |
|---|---|---|---|
| CORESET ID | TCI state ID (925) | | OCt 2 (905) |

EP 4 554 307 A1

# FIG. 10

# FIG. 11

**1100**
BWP#1 ON CELL #1 (ACTIVATION)

CSS#1
CSS#2
USS#1

CORESET#1 (Ref: CSI-RS#1/Cell#1/BWP#1 with QCL-TypeD) — 1115

**1105**
BWP#1 ON CELL #2 (ACTIVATION)

CSS#1
USS#2
USS#2

CORESET#1 (Ref: CSI-RS#1/Cell#1/BWP#1 with QCL-TypeD) — 1120

CORESET#2 (Ref: CSI-RS#1/Cell#2/BWP#1 with QCL-TypeD) — 1125

PDCCH MONITORING OCCASION — 1110

**1130**
ACTIVATION BWP ON CELL #1

USS#1
USS#2
USS#3

CORESET#1 (Ref: CSI-RS#1/Cell#1/BWP#1 with QCL-TypeD) — 1145

CORESET#2 (Ref: CSI-RS#1/Cell#1/BWP#1 with QCL-TypeD) — 1150

**1135**
ACTIVATION BWP ON CELL #2

USS#1
USS#2
USS#3

CORESET#1 (Ref: CSI-RS#1/Cell#2/BWP#1 with QCL-TypeD) — 1155

CORESET#2 (Ref: CSI-RS#2/Cell#2/BWP#1 with QCL-TypeD) — 1160

PDCCH MONITORING OCCASION — 1140

# FIG. 12

**RRC-CONFIGURED TCI STATES**

12-00

| TCI #0 | TCI #1 | TCI #2 | TCI #3 | ⋯ | TCI #M-1 |

⬇

**MAC-CE ACTIVATED TCI STATE FOR PDSCH**

12-20

| TCI #0' | TCI #1' | TCI #2' | ⋯ | TCI #K-1 |

MAC CE BASED BEAM INDICATION

⬇

**TCI STATE FOR PDSCH**

12-40

| TCI #I |

DCI BASED BEAM SELECTION

| | | | | | | | | |
|---|---|---|---|---|---|---|---|---|
| **CORESET Pool ID** | **SERVING CELL ID** | | | | | | **BWP ID** | Oct 1 |
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

⋯

| | | | | | | | |
|---|---|---|---|---|---|---|---|
| $T_{(N-2)\times 8+7}$ | $T_{(N-2)\times 8+6}$ | $T_{(N-2)\times 8+5}$ | $T_{(N-2)\times 8+4}$ | $T_{(N-2)\times 8+3}$ | $T_{(N-2)\times 8+2}$ | $T_{(N-2)\times 8+1}$ | $T_{(N-2)\times 8}$ |

Oct N

12-55 (CORESET Pool ID), 12-50

FIG. 13

# FIG. 14

| | | | |
|---|---|---|---|
| CONTROL INFORMATION FOR TRP #0 | — DCI #0 | CONTROL INFORMATION FOR TRP #0 | — DCI #0 |
| CONTROL INFORMATION FOR TRP #1 | — DCI #1 | CONTROL INFORMATION FOR TRP #1 | — sDCI #0 |
| ⋮ | ⋮ | ⋮ | ⋮ |
| CONTROL INFORMATION FOR TRP #(N-1) | — DCI #(N-1) | CONTROL INFORMATION FOR TRP #(N-1) | — sDCI #(N-2) |

CASE #1 (1400)                CASE #2 (1405)

| | | | |
|---|---|---|---|
| CONTROL INFORMATION FOR TRP #0 | — DCI | CONTROL INFORMATION FOR TRP #0 | |
| CONTROL INFORMATION FOR TRP #1 | — sDCI | CONTROL INFORMATION FOR TRP #1 | Long DCI |
| ⋮ | | ⋮ | |
| CONTROL INFORMATION FOR TRP #(N-1) | | CONTROL INFORMATION FOR TRP #(N-1) | |

CASE #3 (1410)                CASE #4 (1415)

EP 4 554 307 A1

# FIG. 15

| R | SERVING CELL ID | BWP ID | Oct 1 |
|---|---|---|---|
| $C_0$ | TCI state ID $_{0,1}$ | | Oct 2 |
| R | TCI state ID $_{0,2}$ | | Oct 3 [OPTION] |

. . .

| $C_N$ | TCI state ID $_{N,1}$ | Oct M-1 |
|---|---|---|
| R | TCI state ID $_{N,2}$ | Oct M [OPTION] |

# FIG. 16

# FIG. 17

CORESET GROUP #0: CORESET 0 FOR PDCCH #1, #2, #3, #5, #6, #7,
CORESET 1 FOR PDCCH #4, #8                                    [17-50]

17-10

CORESET 0

17-00

DL
1ˢᵗ CC
BWP#1

| PDCCH #1 | PDCCH #2 | PDCCH #3 | PDCCH #5 | PDCCH #6 | PDCCH #7 |

17-20

CORESET 1

PDCCH #4

PDCCH #8

SLOT #0   SLOT #1   SLOT #2   SLOT #3   SLOT #4   SLOT #5   · · ·   t

EP 4 554 307 A1

# FIG. 18

CORESET GROUP #0: CORESET 0 FOR PDCCH #1, #2, #4, #6, #8, #9,        (18-50)
CORESET 2 FOR PDCCH #5, #11

CORESET GROUP #1: CORESET 1 FOR PDCCH #3, #7, #10        (18-60)

FIG. 19

UE          Base station

CORESET-RELATED
CONFIGURATION INFORMATION
S1910

IDENTIFY FIRST CORESET
AND SECOND CORESET    S1920

S1930

DCI

APPLY/UPDATE TCI STATE    S1940

FIG. 20

2005 ∿ TERMINAL PROCESSING UNIT

TERMINAL RECEIVING UNIT ∿ 2000

TERMINAL TRANSMITTING UNIT ∿ 2015

## FIG. 21

## INTERNATIONAL SEARCH REPORT

| | International application No. |
|---|---|
| | **PCT/KR2023/009546** |

**A. CLASSIFICATION OF SUBJECT MATTER**

**H04W 72/23**(2023.01)i; **H04W 16/28**(2009.01)i; **H04L 5/00**(2006.01)i

According to International Patent Classification (IPC) or to both national classification and IPC

**B. FIELDS SEARCHED**

Minimum documentation searched (classification system followed by classification symbols)

H04W 72/23(2023.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제어 자원 세트(control resource set, CORESET), 그룹(group), TCI(Transmission Configuration Indicator), 상태(state), DCI(downlink control information), 코드포인트(codepoint)

**C. DOCUMENTS CONSIDERED TO BE RELEVANT**

| Category* | Citation of document, with indication, where appropriate, of the relevant passages | Relevant to claim No. |
|---|---|---|
| Y | VIVO. Views on unified TCI framework extension for multi-TRP. R1-2203541, 3GPP TSG RAN WG1 #109-e. 29 April 2022. See sections 2.1, 2.2.2 and 2.3.2. | 1-15 |
| Y | SAMSUNG. On unified TCI framework for multi-TRP (MTRP) operation. R1-2203887, 3GPP TSG RAN WG1 #109-e. 29 April 2022. See section 2.1. | 1-15 |
| A | WO 2021-231117 A1 (OFINNO, LLC) 18 November 2021 (2021-11-18) See paragraphs [0041]-[0450]; and figures 1A-25. | 1-15 |
| A | XIAOMI. Unified TCI framework extension for multi-TRP. R1-2203793, 3GPP TSG RAN WG1 #109-e. 29 April 2022. See sections 1-4. | 1-15 |
| A | LG ELECTRONICS. Enhancements on Multi-beam Operation. R1-2110077, 3GPP TSG RAN WG1 #106bis-e. 02 October 2021. See sections 1-2.6. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 October 2023** | **11 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

Information on patent family members

International application No.

**PCT/KR2023/009546**

| Patent document cited in search report | | | Publication date (day/month/year) | Patent family member(s) | | | Publication date (day/month/year) |
|---|---|---|---|---|---|---|---|
| WO | 2021-231117 | A1 | 18 November 2021 | CN | 115606142 | A | 13 January 2023 |
| | | | | EP | 4150836 | A1 | 22 March 2023 |
| | | | | US | 2023-0180242 | A1 | 08 June 2023 |

Form PCT/ISA/210 (patent family annex) (July 2022)